# EUROPÄISCHE PATENTSCHRIFT

(11) **EP 3 504 278 B1**
(45) Veröffentlichungstag und Bekanntmachung des Hinweises auf die Patenterteilung: **07.10.2020**
(21) Anmeldenummer: 17754150.5
(22) Anmeldetag: 14.08.2017
(51) Int. Cl.: C08G 65/332, C08G 63/668, C08G 63/672, C08G 63/688, C08G 18/10, C08G 18/34, C08G 18/42, C08G 18/66, C08G 18/81, C08G 18/32, C08G 18/75, C09D 175/16

(54) **VERFAHREN ZUR HERSTELLUNG EINER LACKIERUNG UNTER EINSATZ EINES WÄSSRIGEN BASISLACKS**
METHOD FOR PRODUCING A VARNISH COATING USING AN AQUEOUS BASIS VARNISH
PROCEDE DE FABRICATION D'UNE LAQUE A L'AIDE D'UN APPRET AQUEUX

(30) Priorität: 24.08.2016 EP 16185538
(43) Veröffentlichungstag der Anmeldung: 03.07.2019
(73) Patentinhaber: BASF Coatings GmbH, 48165 Münster (DE)
(72) Erfinder: STEINMETZ, Bernhard, 48165 Muenster (DE); HOFFMANN, Peter, 48165 Muenster (DE); REUTER, Hardy, 48165 Muenster (DE); JANKOWSKI, Peggy, 97080 Wuerzburg (DE)
(74) Vertreter: BASF IP Association
(86) Internationale Anmeldenummer: PCT/EP2017/070597
(87) Internationale Veröffentlichungsnummer: WO 2018/036855

(56) Entgegenhaltungen:
- EP-A2- 0 546 375
- WO-A1-2016/000949
- US-A- 3 459 584

## Beschreibung

Die vorliegende Erfindung betrifft ein neuartiges Verfahren zur Herstellung einer Lackierung unter Einsatz eines wässrigen Basislacks. Der wässrige Basislack enthält dabei mit cyclischen Tetracarbonsäuredianhydriden hergestellte, carboxyfunktionelle Polyether-basierte Reaktionsprodukte. Die vorliegende Erfindung betrifft auch die mit Hilfe des besagten Verfahrens herstellbaren Lackierungen.

### Stand der Technik

Bekannt ist eine Vielzahl von Verfahren zur Herstellung von farb- und/oder effektgebenden mehrschichtigen Lackierungen (auch genannt Mehrschichtbeschichtungen oder Mehrschichtlackierungen). Aus dem Stand der Technik (vergleiche beispielsweise die deutsche Patentanmeldung DE 199 48 004 A1, Seite 17, Zeile 37, bis Seite 19, Zeile 22, oder das deutsche Patent DE 100 43 405 C1, Spalte 3, Absatz [0018], und Spalte 8, Absatz [0052], bis Spalte 9, Absatz [0057], in Verbindung mit Spalte 6, Absatz [0039], bis Spalte 8, Absatz [0050]) ist beispielsweise das folgende Verfahren bekannt, bei dem
(1) ein pigmentierter wässriger Basislack auf ein Substrat aufgebracht wird,
(2) aus dem in Stufe (1) aufgebrachten Lack ein Polymerfilm gebildet wird,
(3) auf die so erhaltene Basislackschicht ein Klarlack aufgebracht wird und anschließend
(4) die Basislackschicht zusammen mit der Klarlackschicht gehärtet wird.

Dieses Verfahren wird beispielsweise in großem Umfang sowohl für die Erstlackierung (OEM) von Automobilen sowie der Lackierung von Metall- und Kunststoffanbauteilen eingesetzt. Die heutigen Anforderungen an die anwendungstechnologischen Eigenschaften solcher Lackierungen (Beschichtungen) sind enorm.

Ferner liegt es im Bestreben der Automobilhersteller, die Erstlackierung von Karossen so ökonomisch wie möglich zu fertigen. Ein Ansatz hierfür ist die effektive Einsparung von Lackmaterial durch den Verzicht der Applikation eines Klarlacks auf bestimmten Bereichen der Karossen. Entsprechende Bereiche liegen im Innenraum der Karosse, beispielsweise das Innere des Kofferraums oder Bereiche wie die Fahrgastzelle und der Motorraum. Denn in diesen Bereichen ist der hauptsächlich durch die Klarlackierung gewährleistete Schutz vor Umwelteinflüssen wie UV Strahlung oder Feuchtigkeit nicht primär wichtig.

Andererseits trägt die Klarlackierung auch zur mechanischen Stabilität des Gesamtlackierungsaufbaus bei, das heißt beispielsweise zur Härte und Haftung des Aufbaus. Durch das gezielte Weglassen der Klarlackierung werden die in dieser Hinsicht geforderten Spezifikationen der Automobilhersteller nur schwer erreicht. Denn in diesen Bereichen ist dann die Basislackierung die oberste Schicht des Lackierungsaufbaus und direkt den mechanischen Anforderungen des alltäglichen Gebrauchs ausgesetzt.

Erschwerend kommt hinzu, dass aus prozesstechnischen Gründen der zu applizierende Basislack in diesen Bereichen selbstverständlich derselbe Basislack ist, wie er auch auf dem Rest der Karosse appliziert und später mit einem Klarlack überlackiert wird. Eine spezifische Anpassung des Basislacks für die beschriebenen Bereiche ist also nicht möglich.

Nochmals herausfordernder stellt sich die Sachlage dar, wenn zur Energie- und Kosteneinsparung lediglich eine Niedrigtemperaturhärtung des Beschichtungsaufbaus durchgeführt werden soll. So kann durch den Einsatz von Zweikomponenten-Klarlacken zur Herstellung der obersten Lackschicht eines Mehrschichtaufbaus häufig bei Temperaturen von beispielsweise unter 120°C gehärtet werden und auf diese Weise ein die Spezifikationen erfüllender Gesamtaufbau erhalten werden. Jedoch werden dabei wiederum aus prozesstechnischen Gründen die oben genannten Bereiche des Innenraums ebenfalls nur den vergleichsweise niedrigen Härtungstemperaturen ausgesetzt. Umso schwieriger ist es dann, ein angemessenes mechanisches Profil der Bereiche, in denen durch den Basislack die oberste Beschichtung gebildet wird, zu erreichen. Dies gilt ganz besonders bei Einsatz von Basislacken, die als Einkomponenten-Lacke formuliert werden, das heißt Lacke, in denen ein vorhandenes Vernetzungsmittel nicht in einer separat herzustellenden Härterkomponente eingesetzt wird, die erst kurz vor der Applikation mit der Stammkomponente zusammengegeben wird, sondern der Lack als eine Komponente hergestellt und geliefert werden kann. Entsprechende Vorteile solcher Einkomponenten-Systeme liegen selbstverständlich in einfacherer Handhabung, Lagerung, Transport und Verwendung.

Die EP 0 546 375 B1 offenbart wässrige Dispersionen enthaltend ein Polyurethan, welches unter anderem aufgebaut ist aus organischen Polyisocyanaten und Dihydroxylverbindungen mit mindestens zwei Carbonsäure- oder Carboxylatgruppen im Molekül, hergestellt durch Umsetzung von Dihydroxylverbindungen mit Tetracarbonsäuredianhydriden, und die Verwendung dieser Dispersionen zur Herstellung von Überzügen und mit diesen Dispersionen beschichteten Gegenständen wie Leder, Textilien und Baumwolle. Die aus den Polyurethanharzdispersionen hergestellten Beschichtungen weisen eine reduzierte Wasserquellbarkeit auf.

### Aufgabe

Der vorliegenden Erfindung lag die Aufgabe zugrunde, ein Verfahren zur Herstellung einer Lackierung unter Einsatz eines Basislacks bereitzustellen, bei dem die unter Einsatz des Basislacks hergestellte Lackierungsschicht nicht mit einem weiteren Beschichtungsmittel, insbesondere einem Klarlack, überlackiert werden muss, um einen Gesamtaufbau zu erhalten, der gängige Spezifikationen hinsichtlich mechanischer Beständigkeit, insbesondere Haftung, zu erfüllen weiß.

### Lösung

Die genannten Aufgaben konnten gelöst werden durch ein Verfahren zur Herstellung einer Lackierung auf einem Substrat, umfassend die
Herstellung einer gehärteten Basislackschicht auf dem Substrat durch Aufbringen eines pigmentierten wässrigen Basislacks auf das Substrat und anschließende Härtung des Basislacks,
wobei
der pigmentierte wässrige Basislack ein carboxyfunktionelles Polyether-basiertes Reaktionsprodukt enthält, welches herstellbar ist durch Umsetzung von
(a) mindestens einem cyclischen Tetracarbonsäuredianhydrid mit einem die beiden Anhydridgruppen verbrückenden aliphatischen, aromatischen oder araliphatischen Rest X,
   mit
(b) mindestens einem Polyether der allgemeinen Strukturformel (II) 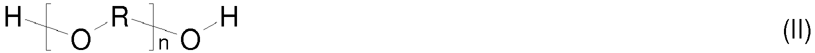 worin
   R ein C₃- bis C₆-Alkylenrest ist und n entsprechend so gewählt ist, dass der Polyether (b) ein zahlenmittleres Molekulargewicht von 500 bis 5000 g/mol besitzt,
   wobei die Komponenten (a) und (b) bei der Umsetzung in einem molaren Verhältnis von 0,7/2,3 bis 1,6/1,7 eingesetzt werden und das resultierende Reaktionsprodukt eine Säurezahl von 5 bis 80 mg KOH/g besitzt,
   und wobei
   die gehärtete Basislackschicht zumindest teilweise die oberste Schicht der hergestellten Lackierung darstellt.

Das neue Verfahren wird in der Folge auch als erfindungsgemäßes Verfahren bezeichnet. Bevorzugte Ausführungsformen des erfindungsgemäßen Verfahrens gehen aus der folgenden Beschreibung sowie den Unteransprüchen hervor.

Ebenfalls Gegenstand der vorliegenden Erfindung ist eine nach dem erfindungsgemäßen Verfahren herstellbare Lackierung, insbesondere Mehrschichtlackierung.

Durch das erfindungsgemäße Verfahren gelingt die Herstellung von Lackierungsaufbauten, in denen die oberste Schicht auf einem Basislack basiert, jedoch trotzdem nicht mit einem Klarlack überlackiert werden muss, um einen Gesamtaufbau zu erhalten, der gängige Spezifikationen hinsichtlich mechanischer Beständigkeit, insbesondere Haftung, erfüllt.

Die Bedingung, dass n so gewählt wird, dass der besagte Polyether ein zahlenmittleres Molekulargewicht von 500 bis 5000 g/mol besitzt, sei wie folgt veranschaulicht. Handelt es sich beispielsweise bei R um einen Tetramethylenrest und soll das zahlenmittlere Molekulargewicht 1000 g/mol betragen, so liegt n im Mittel zwischen 13 und 14. Anhand der gegebenen Vorgaben weiß der Fachmann problemlos, ein entsprechendes Reaktionsprodukt herzustellen beziehungsweise auszuwählen. Davon abgesehen geben die weiter unten folgenden Beschreibung und die Beispiele nochmals zusätzliche Informationen. Der Parameter n ist also genauso wie das zahlenmittlere Molekulargewicht als ein statistischer Mittelwert zu verstehen.

Die Formulierung "zumindest teilweise" versteht sich wie folgt. Die auf dem Substrat hergestellte Lackierung kann Bereiche aufweisen, in denen oberhalb (das heißt auf der dem Substrat abgewandten Seite) der Basislackschicht noch mindestens eine weitere Lackschicht, beispielsweise eine Klarlackschicht, angeordnet ist. Jedoch ist jedenfalls ein Teilbereich der Lackierung so ausgestaltet, dass die Basislackschicht die oberste Schicht darstellt, das heißt die Basislackschicht nicht mit ein oder mehreren weiteren Lackschichten überschichtet ist. Ein solcher Aufbau findet sich beispielsweise in einer schon eingangs beschriebenen Automobilkarosse, in der im Innenraum der Karosse liegende Bereiche, beispielsweise das Innere des Kofferraums oder innenliegende Bereiche der Fahrgastzelle und des Motorraums, nicht mit einem Klarlack überlackiert werden.

### Pigmentierter wässriger Basislack

In dem erfindungsgemäßen Verfahren ist ein spezieller pigmentierter wässriger Basislack einzusetzen.

Unter einem Basislack ist grundsätzlich ein in der Automobillackierung und allgemeinen Industrielackierung eingesetzter farbgebender Zwischenbeschichtungsstoff zu verstehen. Dieser wird im Allgemeinen auf einem mit einem eingebrannten (vollständig gehärteten) Füller oder Grundierfüller vorbehandelten Metall- oder Kunststoffuntergrund, mitunter auch direkt auf dem Kunststoffuntergrund aufgebracht. Auch Altlackierungen, welche gegebenenfalls noch vorbehandelt werden müssen (beispielsweise durch Anschleifen), können als Untergründe dienen. Mittlerweile ist es durchaus üblich, mehr als eine Basislackschicht aufzutragen. Dementsprechend stellt in einem solchen Fall eine erste Basislackschicht den Untergrund für eine zweite dar. Möglich ist dabei insbesondere, anstatt einer Applikation auf eine Schicht eines eingebrannten Füllers den ersten Basislack direkt auf ein mit einer gehärteten Elektrotauschlackschicht versehenes Metallsubstrat zu applizieren und den zweiten Basislack direkt auf die erste Basislackschicht zu applizieren, ohne das letztere separat gehärtet wird.

Um eine Basislackschicht insbesondere gegen Umwelteinflüsse zu schützen, wird auf dieser in der Regel mindestens noch eine zusätzliche Klarlackschicht appliziert. Dies erfolgt in der Regel im nass-in-nass-Verfahren, das heißt der Klarlack wird appliziert, ohne dass die Basislackschicht(en) gehärtet wird (werden). Die Härtung erfolgt dann abschließend gemeinsam. Verbreitet ist inzwischen auch, nur eine Basislackschicht auf einer gehärteten Elektrotauschlackschicht herzustellen, dann einen Klarlack zu applizieren und diese beiden Schichten dann gemeinsam zu härten.

Als Besonderheit im Rahmen des erfindungsgemäßen Verfahrens gilt, dass der einzusetzende Basislack zwar die zuvor beschriebenen Eigenschaften als farbgebender Beschichtungsstoff aufweist und auch als Zwischenbeschichtungsstoff geeignet ist, jedoch zumindest teilweise zur Herstellung der obersten Schicht der herzustellenden Lackierung dient. Das heißt die entsprechende Schicht wird gerade nicht, wie üblich, mit einem Klarlack überlackiert.

Der im erfindungsgemäßen Verfahren einzusetzende wässrige pigmentierte Basislack enthält mindestens ein spezielles carboxyfunktionelles Polyether-basiertes Reaktionsprodukt. Dieses wird zunächst beschrieben.

Die Herstellung der einzusetzenden Reaktionsprodukte kann unter Einsatz von (a) cyclischen Tetracarbonsäuredianhydriden mit einem die beiden Anhydridgruppen verbrückenden aliphatischen, aromatischen oder araliphatischen Rest X erfolgen.

Cyclische Tetracarbonsäuredianhydride sind bekanntermaßen organische Moleküle, die zwei Carbonsäureanhydridgruppen enthalten, wobei die beiden Carbonsäureanhydridgruppen jeweils Teil einer cyclischen Gruppe des Moleküls sind. Das Molekül hat also mindestens zwei cyclische Gruppen, wobei es jedenfalls zwei cyclische Gruppen gibt, in denen jeweils eine Anhydridgruppe vorhanden ist. Diese Form der Anordnung der Anhydridgruppen bedeutet automatisch, dass die ringöffnende Reaktion einer Anhydridgruppe, beispielsweise mit einer Hydroxylgruppe, nicht zum Zerfall des Moleküls in zwei Moleküle führt, sondern auch nach der Ringöffnung nur ein Molekül vorhanden ist. Typische sowie gut verfügbare und bekannte organische Verbindungen mit entsprechenden Anhydridgruppen enthalten ebendiese Anhydridgruppen oft in Form eines Fünfrings. Cyclische Tetracarbonsäuredianhydride, in denen die beiden Anhydridgruppen in einem Fünfring vorhanden sind, sind damit konsequenterweise im Rahmen der vorliegenden Erfindung bevorzugt. Beispielhaft sei Pyromellitsäuredianhydrid angeführt, das Dianhydrid der Pyromellitsäure.

Der die Anhydridgruppen verbrückende Rest X kann aliphatischer, aromatischer oder araliphatischer (gemischt aromatisch-aliphatischer) Natur sein. Er verbrückt die beiden jeweils in einer cyclischen Gruppe vorhandenen Carbonsäureanhydridgruppen, ist also ein vierbindiger Rest. Bevorzugt enthält der Rest X 4 bis 40 Kohlenstoffatome, insbesondere 4 bis 27 Kohlenstoffatome.

Eine aliphatische Verbindung ist eine gesättigte oder ungesättigte, organische (also Kohlenstoff und Wasserstoff enthaltende) Verbindung, die nicht aromatisch beziehungsweise nicht araliphatisch ist. Eine aliphatische Verbindung kann beispielsweise ausschließlich aus Kohlenstoff und Wasserstoff bestehen (aliphatischer Kohlenwasserstoff) oder neben Kohlenstoff und Wasserstoff auch Heteroatome in Form von weiter unten benannten verbrückenden oder endständigen funktionellen Gruppen beziehungsweise Molekülanteilen enthalten. Ferner umfasst der Begriff aliphatische Verbindung also sowohl cyclische als auch acyclische aliphatische Verbindungen und gilt auch im Rahmen der vorliegenden Erfindung als entsprechender Oberbegriff.

Acyclische aliphatische Verbindungen können geradkettig (linear) oder verzweigt sein. Linear bedeutet in diesem Zusammenhang, dass die jeweilige Verbindung keine Verzweigungen hinsichtlich der Kohlenstoffkette aufweist, sondern die Kohlenstoffatome ausschließlich in linearer Abfolge in einer Kette angeordnet sind. Verzweigt beziehungsweise nicht-linear bedeutet damit im Rahmen der vorliegenden Erfindung, dass die jeweils betrachtete Verbindung eine Verzweigung in der Kohlenstoffkette aufweist, das heißt also anders als bei den linearen Verbindungen mindestens ein Kohlenstoffatom der jeweiligen Verbindung ein tertiäres oder quartäres Kohlenstoffatom ist. Als cyclische aliphatische Verbindungen beziehungsweise cyclisch-aliphatische Verbindungen werden solche Verbindungen bezeichnet, in denen zumindest ein Teil der vorhandenen Kohlenstoffatome im Molekül so verknüpft sind, dass einer oder mehrere Ringe ausgebildet werden. Natürlich können neben dem einen oder den mehreren Ringen weitere acyclische geradkettige oder verzweigte aliphatische Gruppen beziehungsweise Molekülanteile in einer cyclisch-aliphatischen Verbindung vorhanden sein.

Als funktionelle Gruppen beziehungsweise Molekülanteile sind im Rahmen der vorliegenden Erfindung solche Gruppen bezeichnet, die Heteroatome wie beispielsweise Sauerstoff und/oder Schwefel enthalten oder daraus bestehen. Dabei können die funktionellen Gruppen verbrückend sein, also zum Beispiel eine Ether-, Ester-, Keto- oder Sulfonylgruppe darstellen, oder endständig sein, wie dies beispielsweise Hydroxylgruppen oder Carboxylgruppen sind. Es können auch verbrückende und endständige funktionelle Gruppen zugleich in einer aliphatischen Verbindung enthalten sein.

Eine aliphatische Gruppe ist demzufolge eine Gruppe, die die oben für die aliphatischen Verbindungen genannten Voraussetzungen erfüllt, jedoch nur ein Teil eines Moleküls ist.

Die Unterscheidung von aliphatischen Verbindungen und aliphatischen Gruppen dient aus folgenden Gründen der besseren Übersichtlichkeit und klareren Definition:
Sofern als Rest X der oben genannten cyclischen Tetracarbonsäuredianhydride (a) ein aliphatischer Rest gewählt wird, handelt es sich nach oben aufgeführter Definition bei der Komponente (a) offensichtlich um eine aliphatische Verbindung. Möglich ist es aber ebenfalls, eine solche Komponente (a) als Verbindung zu betrachten, welche aus zwei, jeweils in einer Ringstruktur angeordneten Anhydridgruppen, sowie einem zwischen den Anhydridgruppen angeordneten aliphatischen Rest besteht. Die zweite Betrachtungsform hat den Vorteil, dass man die in jedem Fall zwingend vorhandenen Gruppen, hier die zwei jeweils in einer Ringstruktur angeordneten Anhydridgruppen, explizit nennen kann. Aus diesem Grund wurde auch diese Form der Betrachtung beziehungsweise Benennung bei der Definition der Komponenten (a) gewählt.

Eine aromatische Verbindung ist bekanntermaßen eine cyclische, planare organische Verbindung mit mindestens einem aromatischen System, das heißt es ist mindestens ein Ring-System mit einem durchkonjugierten π-System entsprechend den Aromatizitätskriterien nach Hückel enthalten. Beispielsweise kann es sich um eine reine Kohlenwasserstoffverbindung handeln (beispielsweise Benzol). Möglich ist auch, dass bestimmte Heteroatome in die Ringstruktur eingebaut sind (beispielsweise Pyridin). Neben dem einen oder den mehreren aromatischen Ring-Systemen können in einer aromatischen Verbindung weitere geradkettige und/oder verzweigte Kohlenwasserstoffgruppen sowie verbrückende und/oder endständige funktionelle Gruppen Teil der aromatischen Verbindung sein, solange diese einen Teil des durchkonjugierten π-Systems bilden. Beispielsweise handelt es sich bei zweien durch eine Ketogruppe oder eine Ethergruppe verknüpfte Phenylringe ebenfalls um aromatische Verbindungen.

Eine aromatische Gruppe ist demzufolge im Sinne der Erfindung eine Gruppe, die die oben für die aromatischen Verbindungen genannten Voraussetzungen erfüllt, jedoch nur ein Teil eines Moleküls ist. Beispielhaft sei auf eine aromatische Gruppe X einer Komponente (a) verwiesen.

Eine araliphatische Verbindung ist eine organische Verbindung, die aromatische und aliphatische Molekülanteile enthält. Solch eine gemischt aromatisch-aliphatische Verbindung muss demnach neben einer aromatischen Gruppe auch eine aliphatische Gruppe enthalten.

Eine araliphatische Gruppe ist demzufolge im Sinne der Erfindung eine Gruppe, die die oben für die araliphatischen Verbindungen genannten Voraussetzungen erfüllt, jedoch nur ein Teil eines Moleküls ist. Beispielhaft sei auf eine araliphatische Gruppe X einer Komponente (a) verwiesen.

Bevorzugt ist, dass der Rest X der Komponente (a) nicht mehr als fünf, nochmals bevorzugt nicht mehr als drei, insbesondere nicht mehr als zwei, verbrückende funktionelle Gruppen wie beispielsweise Ether-, Ester-, Keto- oder Sulfonylgruppen enthält.

Ebenfalls bevorzugt ist, dass der Rest X der Komponente (a) keine endständigen funktionellen Gruppen enthält, die zu einer Ringöffnung der cyclischen Carbonsäureanhydride führen können. Bevorzugt ist also, dass der Rest X der Komponente (a) keine endständigen funktionellen Gruppen ausgewählt aus der Gruppe bestehend aus Hydroxylgruppen, Carboxylgruppen, Aminogruppen, nochmals bevorzugt gar keine endständigen funktionellen Gruppen, enthält.

Ganz besonders bevorzugte Reste X der Komponente (a) enthalten nicht mehr als zwei verbrückende funktionelle Gruppen und keine endständigen funktionellen Gruppen.

Bevorzugt handelt es sich bei dem cyclischen Tetracarbonsäuredianhydrid um Pyromellitsäuredianhydrid, Cyclobutan-tetracarbonsäuredianhydrid, Benzophenontetracarbonsäuredianhydrid, Bicycloocten-tetracarbonsäuredianhydrid oder Diphenylsulfontetracarbonsäuredianhydrid oder auch 4,4'-(4,4'-Isopropyliden-diphenoxy)-bis(phthalanhydrid) oder 4,4'-Oxydiphthalanhydrid. Ganz besonders bevorzugt ist Pyromellitsäuredianhydrid.

Die Herstellung der erfindungsgemäßen Reaktionsprodukte kann unter Einsatz mindestens eines Polyethers (b) der allgemeinen Strukturformel (II) 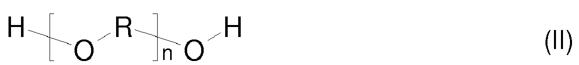 erfolgen, wobei es sich bei R um einen C₃ bis C₆-Alkylrest handelt. Der Index n ist jeweils so zu wählen, dass der besagte Polyether ein zahlenmittleres Molekulargewicht von 500 bis 5000 g/mol besitzt. Bevorzugt besitzt er ein zahlenmittleres Molekulargewicht von 650 bis 4000 g/mol, besonders bevorzugt von 1000 bis 3500 g/mol und ganz besonders bevorzugt 1500 bis 3200 g/mol. Beispielsweise kann das zahlenmittlere Molekulargewicht bei 1000 g/mol, 2000 g/mol oder 3000 g/mol liegen.

Das zahlenmittlere Molekulargewicht wird im Rahmen der vorliegenden Erfindung, sofern nicht spezifisch anders angegeben, mittels Dampfdruckosmose bestimmt. Gemessen wurde im Rahmen der vorliegenden Erfindung mittels eines Dampfdruckosmometers (Modell 10.00, Fa. Knauer) an Konzentrationsreihen der zu untersuchenden Komponente in Toluol bei 50°C mit Benzophenon als Eichsubstanz zur Bestimmung der experimentellen Eichkonstante des eingesetzten Messgeräts (nach E. Schröder, G. Müller, K.-F. Arndt, "Leitfaden der Polymercharakterisierung", Akademie-Verlag, Berlin, S. 47 - 54, 1982, wobei darin Benzil als Eichsubstanz eingesetzt wurde).

Bekanntermaßen und wie bereits weiter oben erläutert, handelt es sich bei dem zahlenmittleren Molekulargewicht immer um einen statistischen Mittelwert. Selbiges muss also auch für den Parameter n gemäß Formel (II) gelten. Die in diesem Zusammenhang zu erläuternde, für die Komponente (b) gewählte Bezeichnung Polyether versteht sich wie folgt. Bei Polymeren, beispielsweise Polyethern (b), handelt es sich immer um Mischungen von verschieden großen Molekülen. Zumindest ein Teil oder alle dieser Moleküle zeichnen sich durch eine Abfolge von gleichen oder verschiedenen Monomereinheiten (als reagierte Form von Monomeren) aus. Das Polymer beziehungsweise Molekülgemisch enthält also grundsätzlich Moleküle, die mehrere (das heißt mindestens zwei) gleiche oder verschiedene Monomereinheiten enthalten. Selbstverständlich können in dem Gemisch auch anteilig die Monomere selbst enthalten sein, das heißt also in ihrer nicht reagierten Form. Dies bedingt bekanntermaßen allein die in der Regel molekular nicht einheitlich ablaufende Herstellungsreaktion, das heißt Polymerisation von Monomeren. Während einem bestimmten Monomer ein diskretes Molekulargewicht zuzuordnen ist, ist ein Polymer also immer eine Mischung von Molekülen, die sich in ihrem Molekulargewicht unterscheiden. Ein Polymer kann daher nicht durch ein diskretes Molekulargewicht beschrieben werden, sondern ihm werden bekanntermaßen immer mittlere Molekulargewichte, beispielsweise das oben genannte zahlenmittlere Molekulargewicht, zugeordnet.
In dem Polyether können alle n Reste R gleich sein. Ebenso ist es aber auch möglich, dass unterschiedliche Arten von Resten R vorhanden sind. Bevorzugt sind alle Reste R gleich.

Bei R handelt es sich bevorzugt um einen C₄-Alkylenrest. Besonders bevorzugt handelt es sich um einen Tetramethylenrest.

Ganz besonders bevorzugt handelt es sich bei dem Polyether um ein im Mittel diolisches, lineares Polytetrahydrofuran.

Die Herstellung des Reaktionsprodukts weist keine Besonderheiten auf. Die Komponenten (a) und (b) werden über allgemein bekannte Reaktionen von Hydroxylgruppen mit Anhydridgruppen miteinander verknüpft. Die Umsetzung kann beispielsweise in Masse oder in Lösung mit typischen organischen Lösemitteln bei Temperaturen von beispielsweise 100°C bis 300°C, bevorzugt bei Temperaturen von 100°C bis 180°C und insbesondere bevorzugt bei Temperaturen von 100°C bis 160°C erfolgen. Selbstverständlich können auch typische Katalysatoren wie Schwefelsäure, Sulfonsäuren und/oder Tetraalkyltitanate, Zink- beziehungsweise Zinnalkoxylate, Dialkylzinnoxide wie beispielsweise Di-n-butylzinnoxid zum Einsatz kommen. Zu beachten ist selbstverständlich, dass ein carboxyfunktionelles Reaktionsprodukt zu entstehen hat. Da die Komponente (b) im Überschuss eingesetzt wird, ist darauf zu achten, dass die jeweils gewünschte Menge an Carboxylgruppen im entstehenden Produkt verbleibt. Bevorzugt ist, dass die nach Öffnung des Anhydrids verbleibende beziehungsweise entstehende Carboxylgruppe im Mittel erhalten bleibt und nicht weiter umgesetzt wird. Dies kann vom Fachmann problemlos dadurch erreicht werden, dass er den Abbruch der fortschreitenden Reaktion über eine Änderung der Temperatur erwirkt. Die Beobachtung der Säurezahl im Verlauf der Reaktion durch entsprechende Messungen erlaubt den kontrollierten Abbruch der Umsetzung nach Erreichen der gewünschten Säurezahl, beispielsweise durch Abkühlen auf eine Temperatur, bei der keine Reaktion mehr stattfinden kann. Genauso kann die gesamte ringöffnende Umsetzungsreaktion des Anhydrids mit den Hydroxylgruppen bei so niedrigen Temperaturen durchgeführt werden, dass eine merkbare Kondensationsreaktion von Carboxylgruppen mit Hydroxylgruppen nicht stattfindet.

Dabei werden die Komponenten (a) und (b) in einem molaren Verhältnis von 0,7/2,3 bis 1,6/1,7 bevorzugt von 0,8/2,2 bis 1,6/1,8 und ganz besonders bevorzugt von 0,9/2,1 bis 1,5/1,8 eingesetzt. Ein nochmals besonders bevorzugter Verhältnisbereich ist von 0,45/1 bis 0,55/1.

Das Reaktionsprodukt ist carboxyfunktionell. Die Säurezahl des Reaktionsprodukts liegt von 5 bis 80 mg KOH/g, bevorzugt 10 bis 70 mg KOH/g, insbesondere bevorzugt 12 bis 60 mg KOH/g und ganz besonders bevorzugt 15 bis 55 mg KOH/g. Die Säurezahl wird gemäß DIN 53402 bestimmt und bezieht sich selbstverständlich jeweils auf das Produkt an sich (und nicht auf die Säurezahl einer gegebenenfalls vorliegenden Lösung oder Dispersion des Produktes in einem Lösemittel). Wird im Rahmen der vorliegenden Erfindung auf eine offizielle Norm verwiesen, ist hiermit selbstverständlich die zum Anmeldetag geltende Fassung der Norm oder, falls zu diesem Zeitpunkt keine geltende Fassung besteht, die letzte geltende Fassung gemeint.

Das resultierende Reaktionsprodukt besitzt bevorzugt ein zahlenmittleres Molekulargewicht von 1500 bis 15000 g/mol, bevorzugt von 2000 bis 10000 g/mol und ganz besonderes bevorzugt von 2200 bis 7000 g/mol.

Das erfindungsgemäß einzusetzende Reaktionsprodukt ist in der Regel hydroxylfunktionell, bevorzugt im Mittel dihydroxylfunktionell. Bevorzugt besitzt es also sowohl Hydroxyl- als auch Carboxyfunktionen.

Für ganz besonders bevorzugte Reaktionsprodukte gilt, dass sie herstellbar sind durch Umsetzung von (a) mindestens einem cyclischen Tetracarbonsäuredianhydrid mit einem die beiden Anhydridgruppen verbrückenden aliphatischen, aromatischen oder araliphatischen Rest X mit (b) einem diolischen, linearen Polytetrahydrofuran mit einem zahlenmittleren Molekulargewicht von 650 bis 4000 g/mol, die Komponenten (a) und (b) in einem molaren Verhältnis von 0,45/1 bis 0,55/1 eingesetzt werden und die Reaktionsprodukte eine Säurezahl von 10 bis 70 mg KOH/g sowie ein zahlenmittleres Molekulargewicht von 1500 bis 10000 g/mol aufweisen.

Bei Bedarf kann aus allen erfindungsgemäß einzusetzenden Reaktionsprodukten eine feinteilige, wässrige Dispersionen hergestellt werden durch schrittweise Zugabe von N,N-Dimethylethanolamin und Wasser bei 30°C zum zuvor aufgeschmolzenen Polymer, um diese einer wässrigen Lackformulierung zuzusetzen.

Die Summe über die gewichtsprozentualen Anteile, bezogen auf das Gesamtgewicht des pigmentierten wässrigen Basislacks, aller erfindungsgemäß einzusetzenden Reaktionsprodukte beträgt bevorzugt 0,1 bis 20 Gew.-%, besonders bevorzugt 0,5 bis 15 Gew.-% und ganz besonders bevorzugt 1,0 bis 10 Gew.-% oder sogar 1,5 bis 5 Gew.-%.

Liegt der Gehalt des erfindungsgemäßen Reaktionsprodukts unter 0,1 Gew.-% so ist es gegebenenfalls möglich, dass keine Verbesserung hinsichtlich der mechanischen Eigenschaften, insbesondere Haftung und Steinschlagbeständigkeit mehr erzielt wird (die Steinschlagbeständigkeit als solche ist zwar keine Eigenschaft, die im Zusammenhang mit im Rahmen der vorliegenden Erfindung im Fokus stehenden Bereichen, das heißt dem Innenraum einer Karosse, von zentraler Relevanz ist, jedoch lässt die Steinschlagbeständigkeit gute Rückschlüsse auf die Beständigkeit einer lackierten Oberfläche gegen mechanischen Anforderungen des alltäglichen Gebrauchs zu). Liegt der Gehalt bei mehr als 20 Gew.-%, so können unter Umständen Nachteile auftreten, wie zum Beispiel eine aufgrund des polaren Charakters gegebene Anfälligkeit gegen Feuchtigkeit oder Schwitzwasser.

Im Falle einer möglichen Spezifizierung auf Basislacke enthaltend bevorzugte Reaktionsprodukte in einem speziellen Anteilsbereich gilt folgendes. Die Reaktionsprodukte, die nicht in die bevorzugte Gruppe fallen, können selbstverständlich weiterhin im Basislack enthalten sein. Der spezielle Anteilsbereich gilt dann nur für die bevorzugte Gruppe von Reaktionsprodukten. Bevorzugt ist allerdings, dass für den Gesamtanteil von Reaktionsprodukten bestehend aus Reaktionsprodukten aus der bevorzugten Gruppe und Reaktionsprodukten, die nicht in die bevorzugte Gruppe fallen, ebenfalls der spezielle Anteilsbereich gilt.

Würde also eine Beschränkung auf einen Anteilsbereich von 0,5 bis 15 Gew.-% und eine bevorzugte Gruppe von Reaktionsprodukten durchgeführt werden, so gilt dieser Anteilsbereich augenscheinlich zunächst nur für die bevorzugte Gruppe an Reaktionsprodukten. Bevorzugt wäre dann aber, dass insgesamt von allen ursprünglich umfassten Reaktionsprodukten bestehend aus Reaktionsprodukten aus der bevorzugten Gruppe und Reaktionsprodukten, die nicht in die bevorzugte Gruppe fallen, ebenfalls von 0,5 bis 15 Gew.-% enthalten sind. Werden also 5 Gew.-% von Reaktionsprodukten der bevorzugten Gruppe eingesetzt, so können höchstens 10 Gew.-% der Reaktionsprodukte der nicht bevorzugten Gruppe eingesetzt werden.

Das genannte Prinzip gilt im Rahmen der vorliegenden Erfindung für alle genannten Komponenten des Basislacks und deren Anteilsbereiche, beispielsweise die Pigmente, die Polyurethanharze als Bindemittel oder auch die Vernetzungsmittel wie Melaminharze.

Die erfindungsgemäß eingesetzten Basislacke enthalten farb- und/oder effektgebende Pigmente. Solche Farbpigmente und Effektpigmente sind dem Fachmann bekannt und werden beispielsweise in Römpp-Lexikon Lacke und Druckfarben, Georg Thieme Verlag, Stuttgart, New York, 1998, Seite 176 und 451, beschrieben. Der Anteil der Pigmente kann beispielsweise im Bereich von 1 bis 40 Gew.-%, bevorzugt 2 bis 30 Gew.-%, besonders bevorzugt 3 bis 25 Gew.-%, bezogen auf das Gesamtgewicht des pigmentierten wässrigen Basislacks, liegen.

Im Rahmen der vorliegenden Erfindung sind Basislacke bevorzugt, die als Bindemittel physikalisch, thermisch oder thermisch und mit aktinischer Strahlung härtbare Polymere enthalten. Als Bindemittel wird im Rahmen der vorliegenden Erfindung gemäß einschlägiger DIN EN ISO 4618 der nichtflüchtige Anteil eines Beschichtungsmittels ohne Pigmente und Füllstoffe verstanden. Spezielle Bindemittel sind demnach beispielsweise auch lacktypische Additive, das erfindungsgemäße Reaktionsprodukt oder weiter unten beschriebene typische Vernetzungsmittel, auch wenn der Ausdruck im Folgenden hauptsächlich in Bezug auf bestimmte physikalisch, thermisch oder thermisch und mit aktinischer Strahlung härtbare Polymere, beispielsweise bestimmte Polyurethanharze, verwendet wird.

Neben dem erfindungsgemäßen Reaktionsprodukt enthalten die erfindungsgemäßen pigmentierten wässrigen Basislacke besonders bevorzugt mindestens ein weiteres, vom Reaktionsprodukt verschiedenes Polymer als Bindemittel, insbesondere mindestens ein Polymer ausgewählt aus der Gruppe bestehend aus Polyurethanen, Polyestern, Poly(meth)acrylaten und/oder Mischpolymerisaten der genannten Polymere, insbesondere bevorzugt jedenfalls, aber nicht zwingend ausschließlich, mindestens ein Polyurethan-Poly(meth)acrylat.

Im Rahmen der vorliegenden Erfindung bedeutet der Begriff "physikalische Härtung" die Bildung eines Films durch Abgabe von Lösemittel aus Polymerlösungen oder Polymerdispersionen. Üblicherweise sind hierfür keine Vernetzungsmittel notwendig.

Im Rahmen der vorliegenden Erfindung bedeutet der Begriff "thermische Härtung" die durch Wärme initiierte Vernetzung einer Lackschicht, bei der in dem zugrunde liegenden Lack entweder ein separat vorliegendes Vernetzungsmittel oder aber selbstvernetzende Bindemittel angewandt werden. Das Vernetzungsmittel enthält reaktive funktionelle Gruppen, die zu den in den Bindemitteln vorhandenen reaktiven funktionellen Gruppen komplementär sind. Üblicherweise wird dies von der Fachwelt als Fremdvernetzung bezeichnet. Sind die komplementären reaktiven funktionellen Gruppen oder autoreaktiven funktionellen Gruppen, das heißt Gruppen, die mit Gruppen derselben Art reagieren, bereits in den Bindemittelmolekülen vorhanden, liegen selbstvernetzende Bindemittel vor. Beispiele geeigneter komplementärer reaktiver funktioneller Gruppen und autoreaktiver funktioneller Gruppen sind aus der deutschen Patentanmeldung DE 199 30 665 A1, Seite 7, Zeile 28 bis Seite 9, Zeile 24 bekannt.

Im Rahmen der vorliegenden Erfindung ist unter aktinischer Strahlung elektromagnetische Strahlung wie nahes Infrarot (NIR), UV-Strahlung, insbesondere UV-Strahlung, und Korpuskularstrahlung wie Elektronenstrahlung zu verstehen. Die Härtung durch UV-Strahlung wird üblicherweise durch radikalische oder kationische Photoinitiatoren initiiert. Werden die thermische Härtung und die Härtung mit aktinischem Licht gemeinsam angewandt, spricht man auch von "Dual Cure".

In der vorliegenden Erfindung sind sowohl Basislacke bevorzugt, die physikalisch, als auch solche die thermisch härtbar sind. Selbstverständlich findet bei Basislacken, die thermisch härtbar sind, immer auch anteilig eine physikalische Härtung statt. Diese Lacke werden aber schon aus Gründen der Übersichtlichkeit als thermisch härtbar bezeichnet.

Als thermisch härtende Basislacke sind solche bevorzugt, die als Bindemittel ein Polyurethanharz und/oder Polyurethan-Poly(meth)acrylat, bevorzugt ein hydroxylgruppenhaltiges Polyurethanharz und/oder Polyurethan-Poly(meth)acrylat, und als Vernetzungsmittel ein Aminoplastharz oder ein blockiertes oder unblockiertes Polyisocyanat, bevorzugt ein Aminoplastharz, enthalten. Unter den Aminoplastharzen sind Melaminharze bevorzugt.

Die Summe über die gewichtsprozentualen Anteile, bezogen auf das Gesamtgewicht des pigmentierten wässrigen Basislacks, aller Vernetzungsmittel, bevorzugt Aminoplastharze und/oder blockierte und/oder unblockierte Polyisocyanate, insbesondere bevorzugt Melaminharze, beträgt bevorzugt 1 bis 20 Gew.-%, besonders bevorzugt 1,5 bis 17,5 Gew.-% und ganz besonders bevorzugt 2 bis 15 Gew.-% oder sogar 2,5 bis 10 Gew.-%.

Das bevorzugt enthaltene Polyurethanharz und/oder Polyurethan-Poly(meth)acrylat kann ionisch und/oder nicht ionisch hydrophil stabilisiert sein. In bevorzugten Ausführungsformen der vorliegenden Erfindung ist das Polyurethanharz und/oder Polyurethan-Poly(meth)acrylat ionisch hydrophil stabilisiert.

Geeignete gesättigte oder ungesättigte Polyurethanharze beziehungsweise Polyurethan-Poly(meth)acrylate werden beispielsweise beschrieben in
- der deutschen Patentanmeldung DE 199 14 896 A1, Spalte 1, Zeilen 29 bis 49 und Spalte 4, Zeile 23 bis Spalte 11, Zeile 5,
- der deutschen Patentanmeldung DE 199 48 004 A1, Seite 4, Zeile 19 bis Seite 13, Zeile 48,
- der europäischen Patentanmeldung EP 0 228 003 A1, Seite 3, Zeile 24 bis Seite 5, Zeile 40,
- der europäischen Patentanmeldung EP 0 634 431 A1, Seite 3, Zeile 38 bis Seite 8, Zeile 9, oder
- der internationalen Patentanmeldung WO 92/15405, Seite 2, Zeile 35 bis Seite 10, Zeile 32, oder
- der deutschen Patentanmeldung DE 44 37 535 A1.

Die bevorzugt enthaltenen Polyurethanharze und/oder Polyurethan-Poly(meth)acrylate besitzen beispielsweise eine Hydroxylzahl von 0 bis 250 mg KOH/g, insbesondere aber von 20 bis 150 mg KOH/g. Die Säurezahl liegt bevorzugt bei 5 bis 200 mg KOH/g, insbesondere bei 10 bis 40 mg KOH/g. Die Hydroxylzahl wird im Rahmen der vorliegenden Erfindung nach DIN 53240 bestimmt.

Der Gehalt an weiteren Polymeren als Bindemittel, insbesondere Polyurethanharzen und/oder Polyurethan-Poly(meth)acrylaten liegt bevorzugt zwischen 5 und 80 Gew.- %, besonders bevorzugt zwischen 8 und 70 Gew.-% und besonders bevorzugt zwischen 10 und 60 Gew.-%, jeweils bezogen auf den filmbildenden Festkörper des Basislacks.

Unter filmbildendem Festkörper, welcher letztlich dem Bindemittelanteil entspricht, ist der nichtflüchtige Gewichtsanteil des Basislacks ohne Pigmente und gegebenenfalls Füllstoffe zu verstehen. Der filmbildende Festkörper ist folgendermaßen bestimmbar: Eine Probe des pigmentierten wässrigen Basislacks (etwa 1 g) wird mit der 50 bis 100-fachen Menge Tetrahydrofuran versetzt und dann etwa 10 Minuten gerührt. Anschließend werden die unlöslichen Pigmente und gegebenenfalls Füllstoffe abfiltriert, der Rückstand mit wenig THF nachgespült und von dem so erhaltenen Filtrat das THF am Rotationsverdampfer entfernt. Der Rückstand des Filtrats wird zwei Stunden bei 120°C getrocknet und der dabei resultierende filmbildende Festkörper ausgewogen.

Die Summe über die gewichtsprozentualen Anteile, bezogen auf das Gesamtgewicht des pigmentierten wässrigen Basislacks, aller weiteren Polymere als Bindemittel, insbesondere Polyurethanharze und/oder Polyurethan-Poly(meth)acrylate, beträgt bevorzugt 2 bis 40 Gew.-%, besonders bevorzugt 2,5 bis 30 Gew.-% und ganz besonders bevorzugt 3 bis 20 Gew.-%.

Bevorzugt ist zudem ein Verdicker enthalten. Als Verdicker eignen sich anorganische Verdicker aus der Gruppe der Schichtsilikate. Neben den anorganischen Verdickern können jedoch auch ein oder mehrere organische Verdicker eingesetzt werden. Diese werden vorzugsweise gewählt aus der Gruppe bestehend aus (Meth)acrylsäure-(Meth)acrylat-Copolymerisat-Verdickern, wie beispielsweise dem Handelsprodukt Rheovis AS S130 (BASF) und Polyurethanverdickern, wie beispielsweise dem Handelsprodukt Rheovis PU 1250 (BASF). Die eingesetzten Verdicker sind von den eingesetzten Bindemitteln verschieden.

Darüber hinaus kann der pigmentierte wässrige Basislack noch mindestens einen Zusatzstoff enthalten. Beispiele für derartige Zusatzstoffe sind rückstandsfrei oder im Wesentlichen rückstandsfrei thermisch zersetzbare Salze, von den oben beschriebenen Polymeren verschiedene physikalisch, thermisch und/oder mit aktinischer Strahlung härtbare Harze als Bindemittel, weitere Vernetzungsmittel, organische Lösemittel, Reaktivverdünner, transparente Pigmente, Füllstoffe, molekulardispers lösliche Farbstoffe, Nanopartikel, Lichtschutzmittel, Antioxidantien, Entlüftungsmittel, Emulgatoren, Slipadditive, Polymerisationsinhibitoren, Initiatoren für radikalische Polymerisationen, Haftvermittler, Verlaufsmittel, filmbildende Hilfsmittel, Sag-Control-Agents (SCAs), Flammschutzmittel, Korrosionsinhibitoren, Wachse, Sikkative, Biozide und Mattierungsmittel. Enthalten sein können auch Verdicker wie anorganische Verdicker aus der Gruppe der Schichtsilikate oder organische Verdicker wie (Meth)acrylsäure-(Meth)acrylat-Copolymerisat-Verdicker oder auch Polyurethanverdicker, welche von den eingesetzten Bindemitteln verschieden sind.

Geeignete Zusatzstoffe der vorstehend genannten Art sind beispielsweise aus
- der deutschen Patentanmeldung DE 199 48 004 A1, Seite 14, Zeile 4, bis Seite 17, Zeile 5,
- dem deutschen Patent DE 100 43 405 C1, Spalte 5, Absätze [0031] bis [0033],
bekannt. Sie werden in den üblichen und bekannten Mengen eingesetzt.

Der Festkörpergehalt der erfindungsgemäßen Basislacke kann je nach den Erfordernissen des Einzelfalls variieren. In erster Linie richtet sich der Festkörpergehalt nach der für die Applikation, insbesondere Spritzapplikation, erforderlichen Viskosität, so dass er vom Fachmann aufgrund seines allgemeinen Fachwissens gegebenenfalls unter Zuhilfenahme weniger orientierender Versuche eingestellt werden kann.

Vorzugsweise liegt der Festkörpergehalt der Basislacke bei 5 bis 70 Gew.-%, besonders bevorzugt bei 8 bis 60 Gew.-% und ganz besonders bevorzugt bei 12 bis 55 Gew.-%.

Unter Festkörpergehalt (nicht-flüchtiger Anteil) ist derjenige Gewichtsanteil zu verstehen, der unter festgelegten Bedingungen beim Eindampfen als Rückstand verbleibt. In der vorliegenden Anmeldung wird der Festkörper, sofern nicht explizit anders angegeben, nach DIN EN ISO 3251 bestimmt. Dazu wird der Basislack für 60 Minuten bei 130°C eingedampft.

Diese Prüfmethode wird, sofern nicht anders angegeben, ebenfalls angewandt, um beispielsweise den Anteil verschiedener Komponenten des Basislacks am Gesamtgewicht des Basislacks zu bestimmen. So kann beispielsweise der Festkörper einer Dispersion eines Polyurethanharzes, welches dem Basislack zugegeben werden soll, entsprechend bestimmt werden, um den Anteil dieses Polyurethanharzes an der Gesamtkomposition zu ermitteln.

Der erfindungsgemäße Basislack ist wässrig. Der Ausdruck "wässrig" ist dem Fachmann in diesem Zusammenhang bekannt. Gemeint ist grundsätzlich ein Basislack, der nicht ausschließlich auf organischen Lösemitteln basiert, das heißt nicht ausschließlich als Lösemittel solche auf organischer Basis enthält, sondern der im Gegenteil als Lösemittel einen signifikanten Anteil Wasser enthält. Bevorzugt ist "wässrig" im Rahmen der vorliegenden Erfindung so zu verstehen, dass das jeweilige Beschichtungsmittel, insbesondere der Basislack, einen Anteil von mindestens 40 Gew.-%, bevorzugt mindestens 50 Gew.-%, ganz besonders bevorzugt mindestens 60 Gew.-% Wasser, jeweils bezogen auf die Gesamtmenge der enthaltenen Lösemittel (das heißt Wasser und organische Lösemittel), aufweist. Darunter bevorzugt beträgt der Anteil an Wasser 40 bis 90 Gew.-%, insbesondere 50 bis 80 Gew.-%, ganz besonders bevorzugt 60 bis 75 Gew.-%, jeweils bezogen auf die Gesamtmenge der enthaltenen Lösemittel.

Die Herstellung der erfindungsgemäß eingesetzten Basislacke kann unter Einsatz der für die Herstellung von Basislacken üblichen und bekannten Mischverfahren und Mischaggregaten erfolgen.

### Das erfindungsgemäße Verfahren und die erfindungsgemäße Mehrschichtlackierung

Bei dem erfindungsgemäßen Verfahren zur Herstellung einer Lackierung auf einem Substrat wird der oben beschriebene Basislack eingesetzt.

Das Verfahren umfasst somit die Herstellung einer gehärteten Basislackschicht auf dem Substrat durch Aufbringen des oben beschriebenen pigmentierten wässrigen Basislacks auf das Substrat und anschließende Härtung des Basislacks,
wobei
die gehärtete Basislackschicht zumindest teilweise die oberste Schicht der hergestellten Lackierung darstellt.

Die Applikation des erfindungsgemäß eingesetzten pigmentierten wässrigen Basislacks erfolgt üblicherweise auf mit Füller oder Grundierfüller vorbehandelten Metall- oder Kunststoffsubstraten. Gegebenenfalls kann der besagte Basislack auch direkt auf einen Kunststoffuntergrund aufgebracht werden.

Soll ein Metallsubstrat beschichtet werden, so wird dieses vor der Applikation des Füllers oder Grundierfüllers bevorzugt noch mit einer Elektrotauchlackierung beschichtet. Natürlich kann die Applikation des erfindungsgemäß einzusetzenden Basislacks auch direkt auf die gehärtete Elektrotauchlackschicht erfolgen. Möglich ist auch, dass auf die Elektrotauschlackschicht ein erster Basislack aufgebracht wird, dieser mit einem erfindungsgemäß einzusetzenden Basislack überlackiert wird und die beiden Basislackschichten dann wie weiter unten beschreiben gemeinsam gehärtet werden.

Wird ein Kunststoffsubstrat beschichtet, so wird dieses vor der Applikation des Füllers oder Grundierfüllers bevorzugt noch vorbehandelt. Die hierzu am häufigsten angewendeten Verfahren sind das Beflammen, die Plasmabehandlung und die Corona-Entladung. Bevorzugt wird das Beflammen eingesetzt.

Die Applikation des erfindungsgemäßen pigmentierten wässrigen Basislacks auf wie oben beschriebene mit gehärteten Elektrotauchlackierungen und/oder Füllern vorbeschichtete Metallsubstrate sowie Kunststoffsubstrate kann in den im Rahmen der Automobilindustrie üblichen Schichtdicken im Bereich von beispielsweise 5 bis 100 Mikrometer, bevorzugt 5 bis 60 Mikrometer erfolgen (Trockenfilmschichtdicke). Dabei werden Spritzapplikationsmethoden angewandt, wie zum Beispiel Druckluftspritzen, Airless-Spritzen, Hochrotation, elektrostatischer Sprühauftrag (ESTA), gegebenenfalls verbunden mit Heissspritzapplikation wie zum Beispiel Hot-Air-Heissspritzen.

Nach der Applikation des pigmentierten wässrigen Basislacks kann dieser nach bekannten Methoden zwischengetrocknet werden. Beispielsweise können (1-Komponenten)-Basislacke, welche bevorzugt sind, bei Raumtemperatur für 1 bis 60 Minuten abgelüftet werden und darauf folgend bevorzugt bei gegebenenfalls leicht erhöhten Temperaturen von 30 bis 90°C zwischengetrocknet werden. Unter Ablüften und Zwischentrocknung ist im Rahmen der vorliegenden Erfindung ein Abdunsten von organischen Lösemitteln und/oder Wasser zu verstehen, wodurch der Lack trockener, aber noch nicht gehärtet wird beziehungsweise noch kein vollständig vernetzter Lackfilm gebildet wird.

Im Anschluss daran kann auf einen Teil der Basislackschicht mindestens ein weiteres Beschichtungsmittel, beispielsweise ein handelsüblicher Klarlack, nach ebenfalls gängigen Methoden appliziert werden, wobei die Schichtdicken wiederum in den gängigen Bereichen, beispielsweise 5 bis 100 Mikrometer, liegen. Wichtig ist aber im Rahmen der vorliegenden Erfindung, dass die Basislackschicht zumindest teilweise die oberste Schicht der hergestellten Lackierung beziehungsweise Mehrschichtlackierung darstellt.

Nach der Applikation des optionalen Klarlacks kann dieser bei Raumtemperatur für beispielsweise 1 bis 60 Minuten abgelüftet und gegebenenfalls getrocknet werden. Dann wird der Klarlack zusammen mit dem applizierten pigmentierten Basislack gehärtet. Dabei finden beispielsweise Vernetzungsreaktionen statt, wodurch eine erfindungsgemäße farb- und/oder effektgebende mehrschichtige Lackierung auf einem Substrat hergestellt wird. Die Härtung kann bei Temperaturen von 70 bis 200°C erfolgen.

Von besonderem Vorteil im Rahmen der vorliegenden Erfindung ist aber, dass trotz der Tatsache, dass zumindest ein Teil des Gesamtaufbaus aus Substrat und Lackierungen so konstituiert ist, dass die gehärtete Basislackschicht die oberste Schicht der hergestellten Lackierung darstellt, bei geringeren Temperaturen von nicht mehr als 120°C gehärtet werden kann und trotzdem ein die Spezifikationen hinsichtlich Härte und Haftung erfüllender Gesamtaufbau erhalten wird.

Demzufolge wird im Rahmen der vorliegenden Erfindung der applizierte Basislack bevorzugt bei 70 bis 120°C, nochmals bevorzugt bei 75 bis 110°C, ganz besonders bevorzugt bei 75 bis 100°C gehärtet.

Der applizierte Basislack wird dabei entweder allein gehärtet (beispielsweise wenn zuvor ein Füller appliziert und separat gehärtet wird und zudem kein weiteres Beschichtungsmittel teilweise appliziert wird) oder gemeinsam mit weiteren Beschichtungsmitteln gehärtet (beispielsweise wenn ein Klarlack anteilig auf die noch nicht gehärtete Basislackschicht appliziert wird oder unterhalb des Basislacks eine andere, nicht separat gehärtete Beschichtungsschicht hergestellt worden ist).

Die Beschichtung von Kunststoffsubstraten erfolgt im Grunde genommen analog zu der von Metallsubstraten, wobei selbstverständlich darauf zu achten ist, dass bei so niedrigen Temperaturen gehärtet wird, dass die Integrität des Substrats bewahrt wird. Entsprechend vorteilhaft ist in diesem Zusammenhang das erfindungsgemäße Verfahren.

Ein diesem Zusammenhang bestehender Vorteil des erfindungsgemäßen Verfahrens ist, dass auch ein Substrat, welches beispielsweise anteilig aus Kunststoff, anteilig aus Metall besteht, in einem Arbeitsvorgang beschichtet und gehärtet werden kann. Denn die niedrigen Härtungstemperaturen führen dazu, dass das Kunststoffsubstrat keine Verformung erleidet, sondern seine strukturelle Integrität beibehält.

Gegenstand der vorliegenden Erfindung ist selbstverständlich auch ein durch Anwendung des Verfahrens resultierendes lackiertes Substrat sowie eine nach dem Verfahren hergestellte Lackierung.

Ein weiterer Aspekt der vorliegenden Erfindung ist die Verwendung des beschriebenen pigmentierten wässrigen Basislacks zur Verbesserung der mechanischen Stabilität, insbesondere Haftung, von Lackierungen, bei deren Herstellung der Basislack eingesetzt wurde und die einer Niedrigtemperaturhärtung unterworfen wurden.

Die Niedrigtemperaturhärtung ist dem Fachmann ein Begriff. Bevorzugt ist darunter eine Härtung bei Temperaturen von geringer als 120°C, bevorzugt geringer 100°C zu verstehen.

Im Folgenden wird die Erfindung anhand von Beispielen erläutert.

### Beispiele

### Bestimmung des zahlenmittleren Molekulargewichts:

Das zahlenmittlere Molekulargewicht wurde mittels Dampfdruckosmose bestimmt. Gemessen wurde mittels eines Dampfdruckosmometers (Modell 10.00, Fa. Knauer) an Konzentrationsreihen der zu untersuchenden Komponente in Toluol bei 50°C mit Benzophenon als Eichsubstanz zur Bestimmung der experimentellen Eichkonstante des eingesetzten Messgeräts (nach E. Schröder, G. Müller, K.-F. Arndt, "Leitfaden der Polymercharakterisierung", Akademie-Verlag, Berlin, S. 47 - 54, 1982, wobei darin allerdings Benzil als Eichsubstanz eingesetzt wurde).

### Herstellung eines erfindungsgemäß einzusetzenden Reaktionsprodukts ER

In einem 4 l Edelstahlreaktor, ausgestattet mit Ankerrührer, Thermometer, Kühler, Thermometer zur Kopftemperaturmessung wurden 128,1 g Pyromellitsäuredianhydrid (CAS-Nr. 89-32-7, Fa. Lonza) (0,5873 mol) und 2349,9 g lineares PolyTHF2000 (Fa. BASF SE) mit einer OH-Zahl (OH-Zahl Bestimmung nach DIN 53240) von 56,1 mg KOH/g (1,1750 mol) und 50,0 g Cyclohexan in Anwesenheit von 2,0 g Di-n-butylzinnoxid (Axion® CS 2455, Fa. Chemtura) auf 130°C Produkttemperatur aufgeheizt und bei dieser Temperatur gehalten.

Nach etwa drei Stunden war der Reaktionsansatz klar und es wurde erstmalig eine Säurezahl bestimmt. Der Ansatz wurde weitere drei Stunden bei 130°C gehalten, bis die Säurezahl bei 26,3 mg KOH/g lag (Theorie: 26,6 mg KOH/g). Das Cyclohexan wurde bei 130°C unter Vakuum und Rühren abdestilliert. Mittels Gaschromatographie wurde ein Cyclohexangehalt kleiner 0,15 Gew.-% bestimmt.

Das anfangs bei Raumtemperatur flüssige Polymer beginnt nach drei Tagen zu kristallisieren. Das feste Polymer lässt sich bei einer Temperatur von 80°C leicht aufschmelzen und bleibt auch bei Raumtemperatur über mindestens zwei Stunden flüssig, so dass es in diesem Zustand leicht einer Lackformulierung zugesetzt werden kann.
Feststoffgehalt (130°C, 60 min, 1 g): 99,9%
Säurezahl: 26,3 mg KOH/g
Zahlenmittleres Molekulargewicht (Dampfdruckosmose): 4100 g/mol
Viskosität (Harz : Butylglykol (Fa. BASF SE) = 2 : 1): 3100 mPa·s, (gemessen bei 23°C mit einem Rotationsviskosimeter der Fa. Brookfield, Typ CAP 2000+, Spindel 3, Scherrate: 2500 s⁻¹)

### Herstellung von wässrigen Basislacken und Lackierungen sowie Untersuchung dieser Lackierungen

Hinsichtlich der in den nachstehenden Tabellen angegebenen Formulierungsbestandteile und deren Mengen ist folgendes zu berücksichtigen. Wird auf ein Handelsprodukt oder eine anderswo beschriebene Herstellvorschrift verwiesen, ist unabhängig von der jeweils gewählten Hauptbenennung des Bestandteils genau dieses Handelsprodukt oder genau das im Rahmen der referenzierten Vorschrift hergestellte Produkt gemeint.

Besitzt also ein Formulierungsbestandteil die Hauptbenennung "Melaminformaldehydharz" und ist dazu ein Handelsprodukt angegeben, so wird das Melaminformaldehydharz als genau dieses Handelsprodukt eingesetzt. Gegebenenfalls im Handelsprodukt vorhandene weitere Bestandteile wie Lösemittel sind also zu berücksichtigen, wenn auf die Menge der Wirksubstanz (des Melaminformaldehydharzes) zurückgeschlossen werden soll.

Wird also für einen Formulierungsbestandteil auf eine Herstellvorschrift verwiesen und resultiert bei dieser Herstellung beispielsweise eine Polymer-Dispersion mit einem bestimmten Festkörper, so wird genau diese Dispersion eingesetzt. Es ist nicht maßgeblich, ob als Hauptbenennung der Begriff "Polymer-Dispersion" oder lediglich die Wirksubstanz, beispielsweise "Polymer", "Polyester" oder "polyurethanmodifiziertes Polyacrylat" gewählt wurde. Dies ist zu berücksichtigen, wenn auf die Menge der Wirksubstanz (des Polymers) zurückgeschlossen werden soll.

Alle in den Tabellen angegebenen Anteile sind Gewichtsteile.

### Herstellung eines schwarz-metallischen Wasserbasislacks V1

Die in der Tabelle A unter "wässrige Phase" aufgeführten Komponenten wurden in der angegebenen Reihenfolge zu einer wässrigen Mischung zusammengerührt. Im nächsten Schritt wurde aus den unter "organische Phase" aufgeführten Komponenten eine organische Mischung hergestellt. Die organische Mischung wurde zur wässrigen Mischung hinzugegeben. Sodann wurde 10 Minuten lang gerührt und mit Hilfe von deionisiertem Wasser und Dimethylethanolamin auf einen pH Wert von 8 und eine Spritzviskosität von 100 mPas bei einer Scherbelastung von 1000 s⁻¹, gemessen mit einem Rotations-Viskosimeter (Gerät Rheomat RM 180 der Firma Mettler-Toledo) bei 23°C, eingestellt.

**Tabelle A: Wasserbasislack V1**

| Komponente | Gewichtsteile |
|---|---|
| **Wässrige Phase** | |
| 3%ige Na-Mg-Schichtsilikatlösung | 12,88 |
| Deionisiertes Wasser | 7,58 |
| Butylglykol (BASF) | 1,46 |
| Isopropanol (BASF) | 1,62 |
| n-Propanol (BASF) | 0,52 |
| Butyldiglykol (BASF) | 0,97 |
| Butoxypropanol (BASF) | 1,35 |
| 2-Ethylhexanol (BASF) | 2,7 |
| Isopar L (Exxon Mobil) | 0,52 |
| Byk®-347 (Altana-Byk Chemie) | 0,44 |
| Nacure 2500 (King Industries) | 0,4 |
| Daotan TW6464 (Cytec) | 1,21 |
| Polyurethandispersion - hergestellt nach WO 92/15405 (Seite 14, Zeile 13 bis Seite 15, Zeile 13) | 20,21 |
| Polyurethanmodifiziertes Polyacrylat; hergestellt gemäß S. 7, Z. 55 bis S.8, Z. 23 der DE 4437535 A1 | 2,7 |
| 50 Gew.-%ige Lösung Rheovis® PU 1250 (BASF) Rheologiemittel | 0,18 |
| 80%ige Lösung in Butylglykol eines gemäß Seite 28, Zeilen 13 bis 33 der WO 2014/033135 A2 hergestellten Polyesters | 2,16 |
| TMDD (BASF) | 1,36 |
| Melaminformaldehydharz (Cymel® 3020 von Cytec) | 3,73 |
| 10%iges Dimethylethanolamin in Wasser | 0,88 |
| Pfropfmischpolymerisat auf Polyurethanbasis; hergestellt analog Beispiel A (Seite 72, Zeile 8 bis Seite 75, Zeile 11) der WO2015/091204 A1 | 15,86 |
| Rußpaste | 9,74 |
| Blaupaste | 2,37 |
| Bariumsulfatpaste | 3,13 |
| Interferenzpiqment-Schlämme | |
| Mearlin Ext. super violett | 0,4 |
| Iriodin SQB Rutil Perlblau | 0,82 |
| Mischlack, hergestellt analog EP 1534792 B1, Spalte 11, Zeile 1-17 | 3,95 |

| **Organische Phase** | |
|---|---|
| Mischung zweier handelsüblicher Aluminiumpigmente, erhältlich von Firma Altana-Eckart | 0,26 |
| Butylglykol | 0,34 |
| Polyester; hergestellt gemäß Beispiel D, Spalte 16, Z. 37-59 der DE-A-4009858 | 0,26 |

### Herstellung der Rußpaste:

Die Rußpaste wurde aus 25 Gewichtsteilen einer gemäß der internationalen Patentanmeldung WO 91/15528 Bindemitteldispersion A hergestellten acrylierten Polyurethandispersion, 10 Gewichtsteilen Ruß, 0,1 Gewichtsteilen Methylisobutylketon, 1,45 Gewichtsteilen Dimethylethanolamin (10%ig in VE-Wasser), 2 Gewichtsteilen eines handelsüblichen Polyethers (Pluriol® P900 der Firma BASF SE) und 61,45 Gewichtsteilen deionisiertem Wasser hergestellt.

### Herstellung der Blaupaste:

Die Blaupaste wurde aus 69,8 Gewichtsteilen einer gemäß der internationalen Patentanmeldung WO 91/15528 Bindemitteldispersion A hergestellten acrylierten Polyurethandispersion, 12,5 Gewichtsteilen Paliogen® Blau L 6482, 1,5 Gewichtsteilen Dimethylethanolamin (10%ig in VE-Wasser), 1,2 Gewichtsteilen eines handelsüblichen Polyethers (Pluriol® P900 der Firma BASF SE) und 15 Gewichtsteilen deionisiertem Wasser hergestellt.

### Herstellung von erfindungsgemäßen schwarz-metallischen Wasserbasislacken E1-E4

### Wasserbasislack E1:

Die in der Tabelle B unter "wässrige Phase" aufgeführten Komponenten wurden in der angegebenen Reihenfolge zu einer wässrigen Mischung zusammengerührt. Im nächsten Schritt wurde aus den unter "organische Phase" aufgeführten Komponenten eine organische Mischung hergestellt. Die organische Mischung wurde zur wässrigen Mischung hinzugegeben. Sodann wurde 10 Minuten lang gerührt und mit Hilfe von deionisiertem Wasser und Dimethylethanolamin auf einen pH Wert von 8 und eine Spritzviskosität von 100 mPas bei einer Scherbelastung von 1000 s⁻¹, gemessen mit einem Rotations-Viskosimeter (Gerät Rheomat RM 180 der Firma Mettler-Toledo) bei 23°C, eingestellt.

**Tabelle B: Wasserbasislack E1**

| Komponente | Gewichtsteile |
|---|---|
| **Wässrige Phase** | |
| 3%ige Na-Mg-Schichtsilikatlösung | 19,63 |
| Deionisiertes Wasser | 6,56 |
| Butylglykol (BASF) | 4,72 |
| Adeka NOL UH-756VF (Adeka) | 0,39 |
| Polyurethanmodifiziertes Polyacrylat; hergestellt gemäß S. 7, Z. 55 bis S.8, Z. 23 der DE 4437535 A1 | 3,0 |
| Reaktionsprodukt ER | 3,15 |
| TMDD (BASF) | 1,83 |
| Melaminformaldehydharz (Luwipal® 052 der BASF) | 4,09 |
| 10%iges Dimethylethanolamin in Wasser | 0,65 |
| Pfropfmischpolymerisat auf Polyurethanbasis; hergestellt analog Beispiel A (Seite 72, Zeile 8 bis Seite 75, Zeile 11) der WO2015/091204 A1 | 32,33 |
| Rußpaste | 12,74 |
| Blaupaste | 3,10 |

| Interferenzpiqment-Schlämme | |
|---|---|
| Mearlin Ext. super violett | 0,52 |
| Iriodin SQB Rutil Perlblau | 1,07 |
| Mischlack, hergestellt analog EP 1534792 B1, Spalte 11, Zeile 1-17 | 4,84 |

| **Organische Phase** | |
|---|---|
| Mischung zweier handelsüblicher Aluminiumpigmente, erhältlich von Firma Altana-Eckart | 0,34 |
| Butylglykol | 0,39 |
| Pfropfmischpolymerisat auf Polyurethanbasis; hergestellt analog Beispiel A (Seite 72, Zeile 8 bis Seite 75, Zeile 11) der WO2015/091204 A1 | 0,65 |

Der Wasserbasislack E2 wurde analog Tabelle B hergestellt, wobei allerdings 6,82 statt 4,09 Gewichtsteile Melaminformaldehydharz (Luwipal® 052 der BASF) und 25,95 statt 32,33 Gewichtsteile Pfropfmischpolymerisat auf Polyurethanbasis; hergestellt analog Beispiel A (Seite 72, Zeile 8 bis Seite 75, Zeile 11) der WO2015/091204 A1 eingesetzt wurden.

Der Wasserbasislack E3 wurde analog Tabelle B hergestellt, wobei allerdings 5,25 statt 3,15 Gewichtsteile des Reaktionsprodukts ER und 25,95 statt 32,33 Gewichtsteile Pfropfmischpolymerisat auf Polyurethanbasis; hergestellt analog Beispiel A (Seite 72, Zeile 8 bis Seite 75, Zeile 11) der WO2015/091204 A1 eingesetzt wurden.

Der Wasserbasislack E4 wurde analog Tabelle B hergestellt, wobei allerdings 0,67 Gewichtsteile an Nacure 2500 (King Industries) zugesetzt wurden.

### Vergleich zwischen den Wasserbasislacken V1 und E1 - E4:

### Steinschlagbeständigkeit:

Zur Bestimmung der Steinschlagbeständigkeit wurden die Mehrschichtlackierungen nach der folgenden allgemeinen Vorschrift hergestellt:
Ein mit einer KTL (kathodische Elektrotauchlackierung) beschichtetes Stahlblech der Abmessungen 10 x 20 cm diente als Substrat.
Auf dieses Blech wurde zunächst der jeweilige Basislack (siehe Tabelle 1) mit einer Zielschichtdicke (Trockenfilmschichtdicke) von 20 Mikrometern pneumatisch appliziert. Nach 1 min Ablüften des Basislacks bei Raumtemperatur wurde der Basislack über 10 min bei 70°C im Umluftofen zwischengetrocknet. Auf die zwischengetrocknete Wasserbasislackschicht wurde ein üblicher Zweikomponentenklarlack (Progloss® 372 der Firma BASF Coatings GmbH) mit einer Zielschichtdicke (Trockenfilmschichtdicke) von 40 Mikrometern appliziert. Die resultierende Klarlackschicht wurde während 20 min bei Raumtemperatur abgelüftet. Anschließend wurden die Wasserbasislackschicht und die Klarlackschicht in einem Umluftofen während 30 Minuten bei unterschiedlichen Temperaturen (siehe Tabelle 1) gehärtet.

In einem weiteren Versuch wurden die nach Ablüften des Basislacks bei Raumtemperatur und Zwischentrocknung über 10 min bei 70°C im Umluftofen ohne weitere Beschichtung mit einem Klarlack direkt in einem Umluftofen während 30 min bei unterschiedlichen Temperaturen (siehe Tabelle 1) gehärtet.

Die so erhaltenen Mehrschichtlackierungen wurden hinsichtlich ihrer Steinschlagbeständigkeit untersucht. Dazu wurde der Steinschlagtest nach DIN 55966-1 durchgeführt. Die Beurteilung der Ergebnisse des Steinschlagtests wurde nach DIN EN ISO 20567-1 durchgeführt. Niedrigere Werte stehen für eine bessere Steinschlagbeständigkeit.

Weiterhin wurden die so erhaltenen Mehrschichtlackierungen hinsichtlich der Gitterschnitthaftung untersucht. Dazu wurde der Gitterschnitt nach DIN EN ISO 2409:2013-6 durchgeführt. Die Beurteilung der Ergebnisse des Gitterschnitttests wurde nach DIN EN ISO 2409:2013-6 durchgeführt. Niedrige Ergebniswerte bedeuten eine verbesserte Haftung.

Außerdem wurden die so behandelten Stahlbleche nach DIN 55662:2009-12 (Verfahren A) einer Dampfstrahlprüfung unterworfen und anschließend gemäß der vorgenannten DIN beurteilt.

Die Ergebnisse finden sich in der Tabelle 1. Die Angabe des Wasserbasislacks (WBL) gibt jeweils an, welcher WBL in der jeweiligen Mehrschichtlackierung eingesetzt wurde. SKK steht für Schwitzwasser-Klima-Kammer und weist auf eine Belastung der Prüftafeln nach DIN EN ISO 6270-2 vor Durchführung des Steinschlagbeziehungsweise Dampfstrahltests hin.

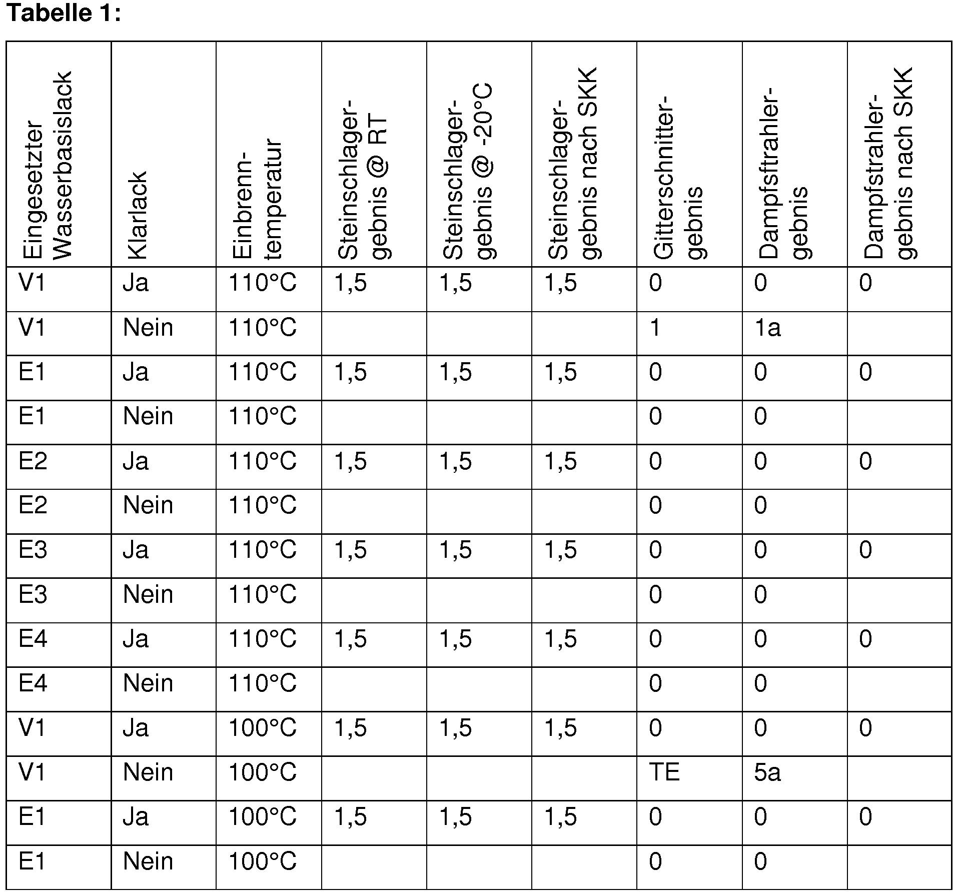

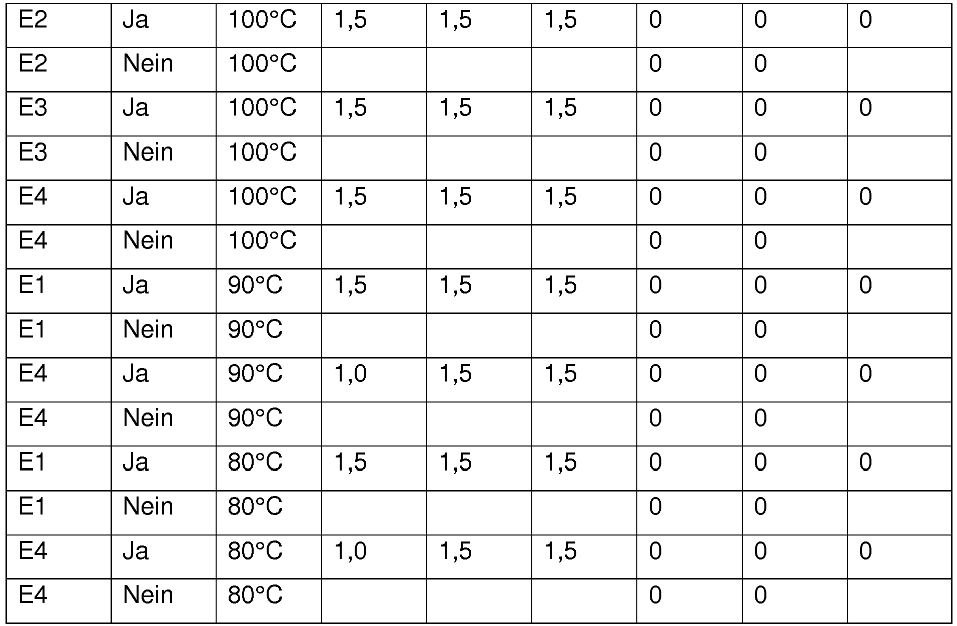

In Summe zeigt sich, dass die erfindungsgemäßen WBL deutlich bessere Haftungseigenschaften, insbesondere bei niedrigen Härtungstemperaturen, aufweisen. Exemplarisch wurden die Wasserbasislacke E1 und E4 gewählt und diese bei für Ein-Komponenten Systeme extrem niedrigen Einbrenntemperaturen gehärtet. Dadurch konnte gezeigt werden, dass selbst bei Einbrenntemperaturen von lediglich 80°C spezifikationsgerechte Aufbauten erreicht werden können.

Im Übrigen zeigt sich im Vergleich aller erfindungsgemäßen Wasserbasislacke mit dem Vergleichssystem, dass die erfindungsgemäßen Systeme bei einer ebenfalls für 1K Systeme sehr niedrigen Einbrenntemperatur von 100°C im klarlackfreien Aufbau sehr gute Ergebnisse zeigen, während der Vergleichs-Wasserbasislack bereits keine mehr akzeptablen Resultate hinsichtlich Gitterschnitt und Dampfstrahl aufweist.

### Herstellung eines rot-metallischen Wasserbasislacks V2:

Die in der Tabelle C unter "wässrige Phase" aufgeführten Komponenten wurden in der angegebenen Reihenfolge zu einer wässrigen Mischung zusammengerührt. Im nächsten Schritt wurde aus den unter "organische Phase" aufgeführten Komponenten eine organische Mischung hergestellt. Die organische Mischung wurde zur wässrigen Mischung hinzugegeben. Sodann wurde 10 Minuten lang gerührt und mit Hilfe von deionisiertem Wasser und Dimethylethanolamin auf einen pH Wert von 8 und eine Spritzviskosität von 100 mPas bei einer Scherbelastung von 1000 s⁻¹, gemessen mit einem Rotations-Viskosimeter (Gerät Rheomat RM 180 der Firma Mettler-Toledo) bei 23°C, eingestellt.

**Tabelle C: Wasserbasislack V2**

| Komponente | Gewichtsteile |
|---|---|
| **Wässrige Phase** | |
| 3%ige Na-Mg-Schichtsilikatlösung | 16,1 |
| Deionisiertes Wasser | 19,4 |
| Butylglykol (BASF) | 1,5 |
| Dipropylenglykolmethylether (BASF) | 3,1 |
| Isopar L (Exxon Mobil) | 3,76 |
| SolventNaphtha 160/180 (Shell) | 0,85 |
| Pluriol P900 (BASF) | 0,85 |
| Byk®-347 (Altana-Byk Chemie) | 0,38 |
| Agitan 281 (Münzing Chemie) | 0,09 |
| TMDD (BASF) | 2,45 |
| Polyurethanmodifiziertes Polyacrylat; hergestellt gemäß S. 7, Z. 55 bis S.8, Z. 23 der DE 4437535 A1 | 2,35 |
| 50 Gew.-%ige Lösung Rheovis® PU 1250 (BASF) Rheologiemittel | 0,43 |
| Rheovis AS 1130 (BASF); Rheologiemittel | 0,31 |
| Polyester; hergestellt gemäß Beispiel D, Spalte 16, Z. 37-59 der DE-A-4009858 | 1,8 |
| Melaminformaldehydharz (Cymel® 327 von Cytec) | 2,85 |
| Melaminformaldehydharz (Luwipal® 052 von BASF) | 3,5 |
| 10%iges Dimethylethanolamin in Wasser | 0,4 |
| Polyurethanacrylat; hergestellt gemäß S. 19, Z. 44-S. 20, Z. 7 der DE-A-1998004 | 17,0 |
| Rotpaste | 17,02 |
| Rußpaste | 0,21 |

| **Organische Phase** | |
|---|---|
| Paliocrom-Orange L2804 (Eckart) | 1,81 |
| Butylglykol | 2,64 |
| Polyester; hergestellt gemäß Beispiel D, Spalte 16, Z. 37-59 der DE-A-4009858 | 1,2 |

### Herstellung der Rotpaste:

Die Rotpaste wurde aus 45,0 Gewichtsteilen einer gemäß der internationalen Patentanmeldung WO 91/15528 Bindemitteldispersion A hergestellten acrylierten Polyurethandispersion, 21,0 Gewichtsteilen Paliogen® Rot L 3885, 0,7 Gewichtsteilen Dimethylethanolamin, 2,5 Gewichtsteilen 1,2-Propylenglykol und 30,8 Gewichtsteilen deionisiertem Wasser hergestellt.

### Herstellung von erfindungsgemäßen rot-metallischen Wasserbasislacken E5 und E6:

### Wasserbasislack E5:

Die in der Tabelle D unter "wässrige Phase" aufgeführten Komponenten wurden in der angegebenen Reihenfolge zu einer wässrigen Mischung zusammengerührt. Im nächsten Schritt wurde aus den unter "organische Phase" aufgeführten Komponenten eine organische Mischung hergestellt. Die organische Mischung wurde zur wässrigen Mischung hinzugegeben. Sodann wurde 10 Minuten lang gerührt und mit Hilfe von deionisiertem Wasser und Dimethylethanolamin auf einen pH Wert von 8 und eine Spritzviskosität von 100 mPas bei einer Scherbelastung von 1000 s⁻¹, gemessen mit einem Rotations-Viskosimeter (Gerät Rheomat RM 180 der Firma Mettler-Toledo) bei 23°C, eingestellt.

**Tabelle D: Wasserbasislack E5**

| Komponente | Gewichtsteile |
|---|---|
| **Wässrige Phase** | |
| 3%ige Na-Mg-Schichtsilikatlösung | 5,07 |
| Deionisiertes Wasser | 11,07 |
| Isopropanol (BASF) | 5,41 |
| Adeka NOL UH-756VF (Adeka) | 0,17 |
| Polyurethanmodifiziertes Polyacrylat; hergestellt gemäß S. 7, Z. 55 bis S.8, Z. 23 der DE 4437535 A1 | 3,04 |
| Reaktionsprodukt ER | 3,11 |
| TMDD (BASF) | 1,52 |
| Melaminformaldehydharz (Luwipal® 052 der BASF) | 4,03 |
| 10%iges Dimethylethanolamin in Wasser | 1,6 |
| Daotan TW6464 (Cytec) | 2,29 |
| Pfropfmischpolymerisat auf Polyurethanbasis; hergestellt analog Beispiel A (Seite 72, Zeile 8 bis Seite 75, Zeile 11) der WO2015/091204 A1 | 25,57 |
| Byk®-347 (Altana-Byk) | 0,63 |
| Pluriol P900 (BASF) | 0,38 |
| Tinuvin 384-2 (BASF) | 0,76 |
| Tinuvin 123 (BASF) | 0,38 |
| Tris-(2-butoxyethyl)-phosphat (Rhodia) | 2,53 |
| Texanol (Eastman) | 2,53 |
| Rotpaste | 21,66 |
| Rußpaste | 0,53 |

| **Organische Phase** | |
|---|---|
| Paliocrom-Orange L2804 (Eckart) | 3,38 |
| Butylglykol | 1,86 |
| Mischlack, hergestellt analog EP 1534792 B1, Spalte 11, Zeile 1-17 | 2,48 |

Der Wasserbasislack E6 wurde analog Tabelle D hergestellt, wobei allerdings 5,18 statt 3,11 Gewichtsteile des Reaktionsprodukts ER und 19,20 statt 25,57 Gewichtsteile Pfropfmischpolymerisat auf Polyurethanbasis; hergestellt analog Beispiel A (Seite 72, Zeile 8 bis Seite 75, Zeile 11) der WO2015/091204 A1 eingesetzt wurden.

### Vergleich zwischen den Wasserbasislacken V2 und E5 - E6:

Die Lacke V2, E5 und E6 wurden analog dem Vergleich zwischen den Wasserbasislacken V1 und E1 - E4 anwendungstechnisch untersucht. In Tabelle 2 sind die erhaltenen Ergebnisse dargestellt.

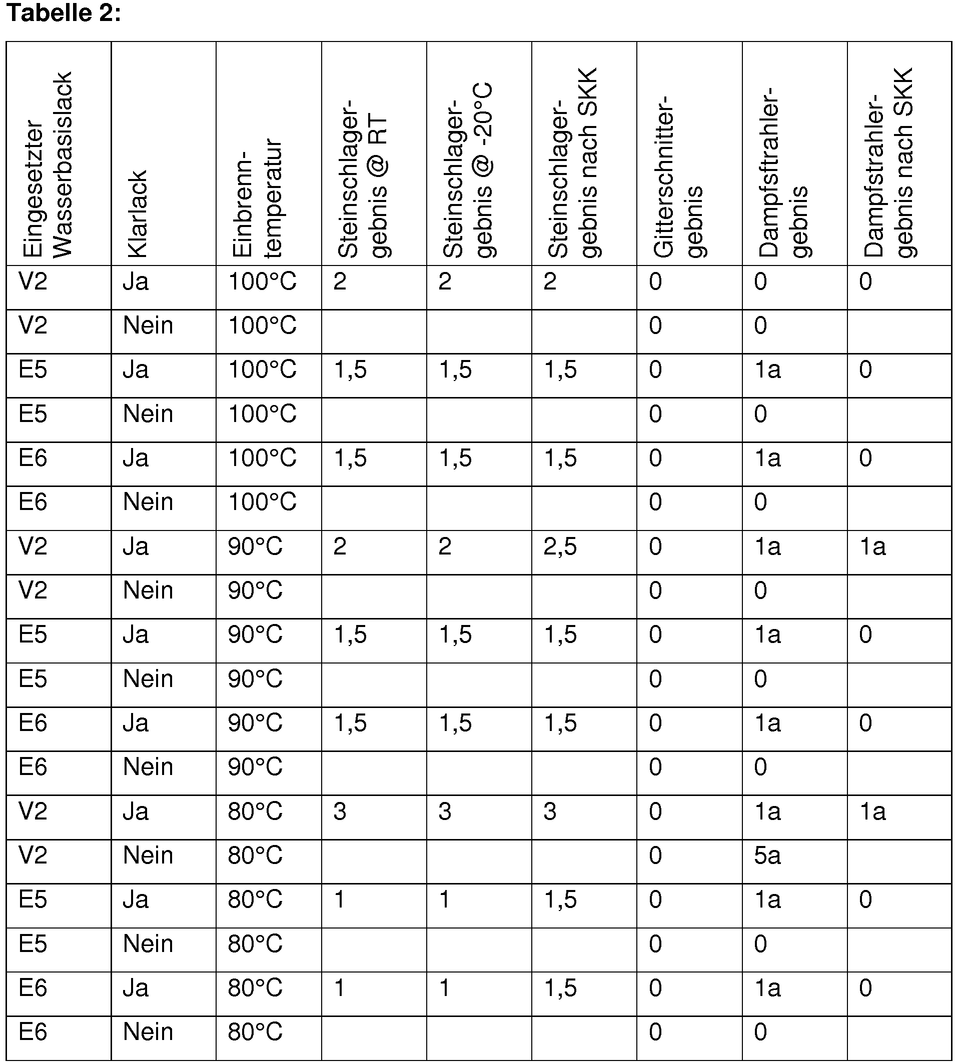

Wiederum zeigt sich, dass bei den gewählten Bedingungen, das heißt insbesondere niedrigen Härtungstemperaturen für 1K Systeme, die erfindungsgemäßen WBL deutlich bessere Haftungseigenschaften aufweisen. Während das Vergleichssystem bei niedrigen Temperaturen sogar mit einem darüber angeordneten Klarlack Schwächen bezüglich der Steinschlagrobustheit aufweist und zudem bei einer Härtungstemperatur extrem anfällig bei der Dampfstrahlbelastung ist, zeigen die erfindungsgemäßen Systeme sehr gute Eigenschaften.

Ferner wurden die Wasserbasislacke V2 und E5, E6 hinsichtlich ihrer Haftungseigenschaften auf unterschiedlichen Untergründen untersucht.

### Vergleich zwischen den Wasserbasislacken V2 und E5 bis E6 auf Füller:

Unter Einsatz der Lacke V2, E5 und E6 wurden analog der oben für die Wasserbasislacke V1 und E1 - E4 beschriebenen Herstellvorschrift Lackierungen hergestellt. Allerdings wurden andere Substrate verwendet, die folgendermaßen hergestellt wurden:
Ein mit einer Standard-KTL beschichtetes Stahlblech der Abmessungen 10 x 20cm wurde mit einem Standard-Füller der Firma Hemmelrath beschichtet. Nach Zwischentrocknen des wässrigen Füllers über einen Zeitraum von 10 Minuten bei 80°C wurde der Füller bei einer Temperatur von 190°C über einen Zeitraum von 30 Minuten eingebrannt.

Der jeweilige Basislack war in der fertiggestellten Lackierung also nicht direkt auf der KTL, sondern auf der Füllerschicht angeordnet.

In Tabelle 3 sind die erhaltenen Ergebnisse dargestellt.

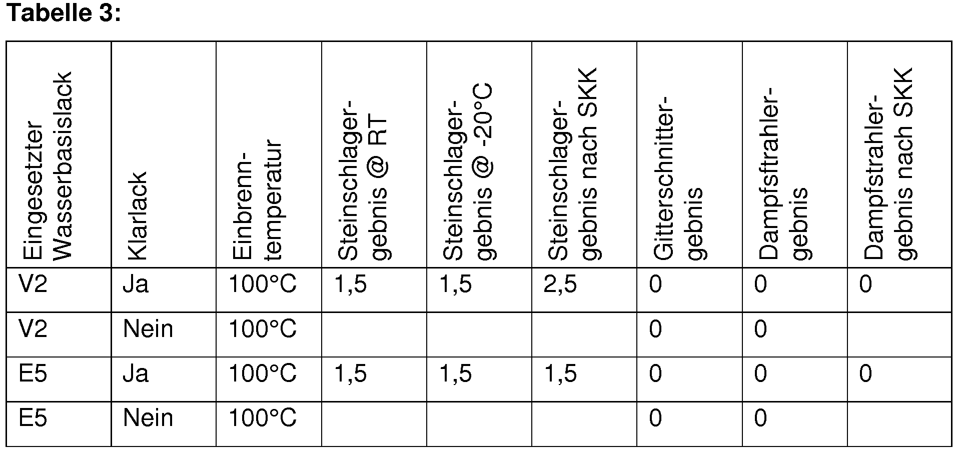

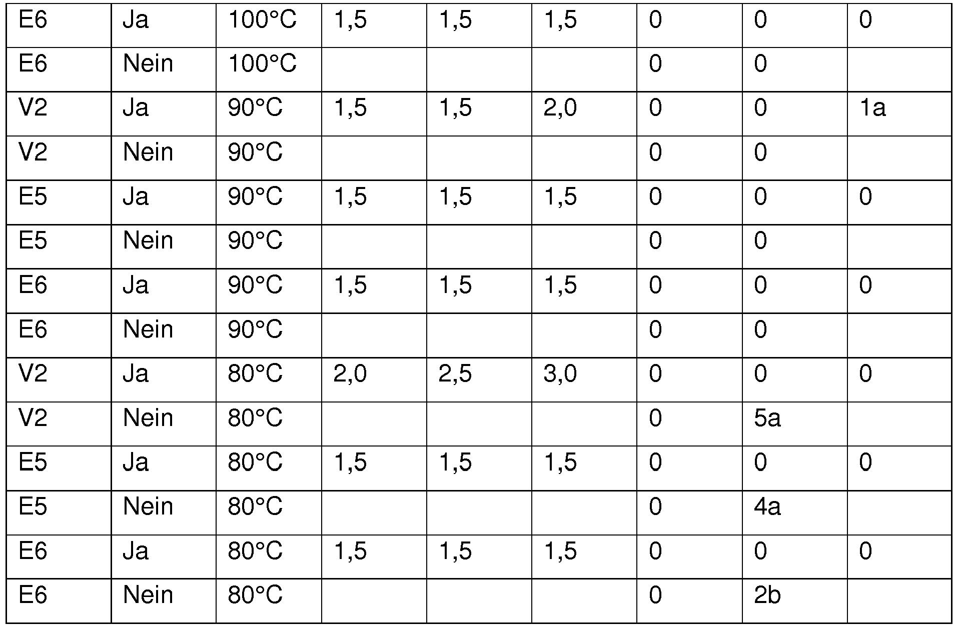

### Vergleich zwischen den WBL V2 und E5 bis E6 auf Kunststoffsubstraten:

Unter Einsatz der Lacke V2, E5 und E6 wurden analog der oben für die Wasserbasislacke V1 und E1 - E4 beschriebenen Herstellvorschrift Lackierungen hergestellt. Allerdings wurden als Substrate Kunststoffsubstrate (Hifax® TRC 221X der Firma Lyondell Basell) eingesetzt. Der jeweilige Basislack war in der fertiggestellten Lackierung also nicht direkt auf der auf einem metallischen Substrat angeordneten KTL, sondern auf dem Kunststoffsubstrat angeordnet. Tabelle 4 zeigt die Ergebnisse.

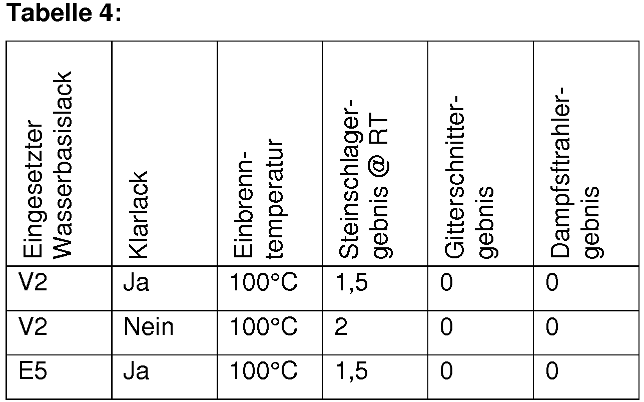

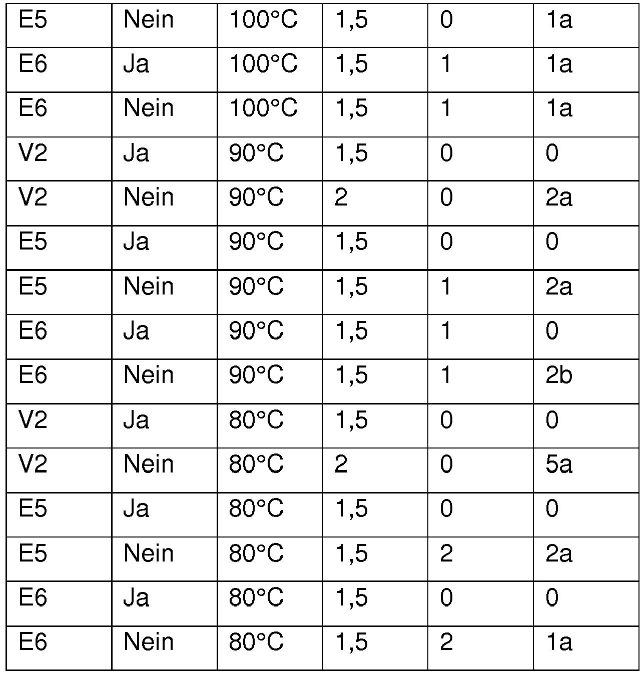

Die Ergebnisse zeigen, dass sich auch auf alternativen Substraten der Effekt der deutlich verbesserten Haftungseigenschaften bestätigt.

## Patentansprüche

1. Verfahren zur Herstellung einer Lackierung auf einem Substrat, umfassend
die Herstellung einer gehärteten Basislackschicht auf dem Substrat durch Aufbringen eines pigmentierten wässrigen Basislacks auf das Substrat und anschließende Härtung des Basislacks,
wobei
der pigmentierte wässrige Basislack ein carboxyfunktionelles Polyether-basiertes Reaktionsprodukt enthält, welches herstellbar ist durch Umsetzung von
(a) mindestens einem cyclischen Tetracarbonsäuredianhydrid mit einem die beiden Anhydridgruppen verbrückenden aliphatischen, aromatischen oder araliphatischen Rest X,
mit
(b) mindestens einem Polyether der allgemeinen Strukturformel (II) 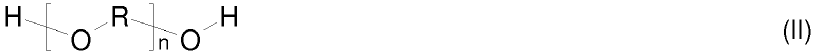 worin
R ein C₃- bis C₆-Alkylenrest ist und n entsprechend so gewählt ist, dass der Polyether (b) ein zahlenmittleres Molekulargewicht, bestimmt wie in der Beschreibung angegeben, von 500 bis 5000 g/mol besitzt,
wobei die Komponenten (a) und (b) bei der Umsetzung in einem molaren Verhältnis von 0,7/2,3 bis 1,6/1,7 eingesetzt werden und das resultierende Reaktionsprodukt eine Säurezahl, bestimmt wie in der Beschreibung angegeben, von 5 bis 80 mg KOH/g besitzt, und wobei
die gehärtete Basislackschicht zumindest teilweise die oberste Schicht der hergestellten Lackierung darstellt.

2. Verfahren nach Anspruch 1, **dadurch gekennzeichnet, dass** der Polyether (b) ein zahlenmittleres Molekulargewicht, bestimmt wie in der Beschreibung angegeben, von 650 bis 4000 g/mol besitzt.

3. Verfahren nach Anspruch 1 oder 2, **dadurch gekennzeichnet, dass** es sich bei der Gruppe R gemäß der allgemeinen Strukturformel (II) um Tetramethylenreste handelt.

4. Verfahren nach Anspruch 1 bis 3, **dadurch gekennzeichnet, dass** die Komponenten (a) und (b) in einem molaren Verhältnis von 0,45/1 bis 0,55/1 eingesetzt werden.

5. Verfahren nach Anspruch 1 bis 4, **dadurch gekennzeichnet, dass** das Polyether-basierte Reaktionsprodukt ein zahlenmittleres Molekulargewicht, bestimmt wie in der Beschreibung angegeben, von 1500 bis 15000 g/mol besitzt.

6. Verfahren nach Anspruch 1 bis 5, **dadurch gekennzeichnet, dass** der Basislack zudem mindestens ein mittels olefinisch ungesättigten Monomeren gepfropftes Polyurethanharz, welches zudem Hydroxylgruppen enthält, sowie ein Melaminharz umfasst.

7. Verfahren nach Anspruch 1 bis 6, **dadurch gekennzeichnet, dass** der Basislack ein Einkomponenten-Basislack ist.

8. Verfahren nach Anspruch 1 bis 7, **dadurch gekennzeichnet, dass** das Tetracarbonsäuredianhydrid (a) Pyromellitsäuredianhydrid, Cyclobutan-tetracarbonsäuredianhydrid, Benzophenontetracarbonsäuredianhydrid, Bicycloocten-tetracarbonsäuredianhydrid und/oder Diphenylsulfontetracarbonsäuredianhydrid ist.

9. Verfahren nach Anspruch 1 bis 8, **dadurch gekennzeichnet, dass** als Substrat ein metallisches Substrat oder ein Kunststoffsubstrat eingesetzt wird.

10. Verfahren nach Anspruch 1 bis 9, **dadurch gekennzeichnet, dass** das Substrat ein metallisches Substrat ist und vor der Applikation des Basislacks auf dem Substrat eine gehärtete Elektrotauchlackierung und gegebenenfalls eine gehärtete Füllerbeschichtung hergestellt wird.

11. Verfahren nach Anspruch 1 bis 10, **dadurch gekennzeichnet, dass** nach der Applikation des Basislacks mindestens ein Klarlack appliziert wird und der Basislack sowie der Klarlack gemeinsam gehärtet werden.

12. Verfahren nach Anspruch 1 bis 11, **dadurch gekennzeichnet, dass** der Basislack bei 70 bis 120°C, nochmals bevorzugt 75 bis 110°C, ganz besonders bevorzugt 75 bis 100°C gehärtet wird.

13. Verfahren nach Anspruch 1 bis 12, **dadurch gekennzeichnet, dass** das Reaktionsprodukt eine Säurezahl, bestimmt wie in der Beschreibung angegeben, von 10 bis 70 mg KOH/g aufweist.

14. Lackiertes Substrat, das mittels des Verfahrens nach Anspruch 1 bis 13 hergestellt werden kann.

15. Verwendung eines pigmentierten wässrigen Basislacks enthaltend ein carboxyfunktionelles Polyether-basiertes Reaktionsprodukt, welches herstellbar ist durch Umsetzung von
(a) mindestens einem cyclischen Tetracarbonsäuredianhydrid mit einem die beiden Anhydridgruppen verbrückenden aliphatischen, aromatischen oder araliphatischen Rest X,
mit
(b) mindestens einem Polyether der allgemeinen Strukturformel (II) 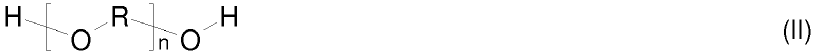 worin
R ein C₃- bis C₆-Alkylenrest ist und n entsprechend so gewählt ist, dass der Polyether (b) ein zahlenmittleres Molekulargewicht, bestimmt wie in der Beschreibung angegeben, von 500 bis 5000 g/mol besitzt,
wobei die Komponenten (a) und (b) bei der Umsetzung in einem molaren Verhältnis von 0,7/2,3 bis 1,6/1,7 eingesetzt werden und das resultierende Reaktionsprodukt eine Säurezahl, bestimmt wie in der Beschreibung angegeben, von 5 bis 80 mg KOH/g besitzt,
zur Verbesserung der mechanischen Stabilität, insbesondere Haftung, von Lackierungen, bei deren Herstellung der Basislack eingesetzt wurde und die einer Niedrigtemperaturhärtung unterworfen wurden.

## Claims

1. Method for producing a coating system on a substrate, comprising
producing a cured basecoat film on the substrate by applying a pigmented aqueous basecoat material to the substrate and subsequently curing the basecoat material,
where
the pigmented aqueous basecoat material comprises a carboxy-functional polyether-based reaction product which is preparable by reaction of
(a) at least one cyclic tetracarboxylic dianhydride having an aliphatic, aromatic or araliphatic radical X which bridges the two anhydride groups,
with
(b) at least one polyether of the general structural formula (II) 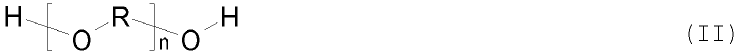 in which
R is a C₃ to C₆ alkylene radical and n is correspondingly selected such that the polyether (b) possesses a number-average molecular weight, determined as specified in the description, of 500 to 5000 g/mol,
where components (a) and (b) are used in the reaction in a molar ratio of 0.7/2.3 to 1.6/1.7 and the resulting reaction product possesses an acid number, determined as specified in the description, of 5 to 80 mg KOH/g,
and where
the cured basecoat film represents at least partially the uppermost coat of the coating system produced.

2. Method according to Claim 1, **characterized in that** the polyether (b) possesses a number-average molecular weight, determined as specified in the description, of 650 to 4000 g/mol.

3. Method according to Claim 1 or 2, **characterized in that** the group R of the general structural formula (II) comprises tetramethylene radicals.

4. Method according to Claim 1 to 3, **characterized in that** components (a) and (b) are used in a molar ratio of 0.45/1 to 0.55/1.

5. Method according to Claim 1 to 4, **characterized in that** the polyether-based reaction product possesses a number-average molecular weight, determined as specified in the description, of 1500 to 15 000 g/mol.

6. Method according to Claim 1 to 5, **characterized in that** the basecoat material further comprises at least one polyurethane resin which is grafted with olefinically unsaturated monomers and which further contains hydroxyl groups, and also comprises a melamine resin.

7. Method according to Claim 1 to 6, **characterized in that** the basecoat material is a one-component basecoat material.

8. Method according to Claim 1 to 7, **characterized in that** the tetracarboxylic dianhydride (a) is pyromellitic dianhydride, cyclobutanetetracarboxylic dianhydride, benzophenonetetracarboxylic dianhydride, bicyclooctenetetracarboxylic dianhydride and/or diphenyl sulfone tetracarboxylic dianhydride.

9. Method according to Claim 1 to 8, **characterized in that** said substrate used is a metallic substrate or a plastics substrate.

10. Method according to Claim 1 to 9, **characterized in that** the substrate is a metallic substrate and before the basecoat material is applied to the substrate, a cured electrocoat system and optionally a cured primer-surfacer coating is produced.

11. Method according to Claim 1 to 10, **characterized in that** after the basecoat material has been applied, at least one clearcoat material is applied and the basecoat material and clearcoat material are cured jointly.

12. Method according to Claim 1 to 11, **characterized in that** the basecoat material is cured at 70 to 120°C, more preferably 75 to 110°C, very preferably 75 to 100°C.

13. Method according to Claim 1 to 12, **characterized in that** the reaction product has an acid number, determined as specified in the description, of 10 to 70 mg KOH/g.

14. Coated substrate which can be produced by means of the method according to Claim 1 to 13.

15. Use of a pigmented aqueous basecoat material comprising a carboxy-functional, polyether-based reaction product which is preparable by reaction of
(a) at least one cyclic tetracarboxylic dianhydride having an aliphatic, aromatic or araliphatic radical X which bridges the two anhydride groups,
with
(b) at least one polyether of the general structural formula (II) 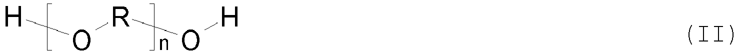 in which
R is a C₃ to C₆ alkylene radical and n is correspondingly selected such that the polyether (b) possesses a number-average molecular weight, determined as specified in the description, of 500 to 5000 g/mol,
where components (a) and (b) are used in the reaction in a molar ratio of 0.7/2.3 to 1.6/1.7 and the resulting reaction product possesses an acid number, determined as specified in the description, of 5 to 80 mg KOH/g,
for improving the mechanical stability, especially adhesion, of coating systems produced using the basecoat material and subjected to low-temperature curing.

## Revendications

1. Procédé pour la préparation d'un laquage sur un substrat, comprenant la préparation d'une couche de laque de base durcie sur le substrat par dépôt d'une laque de base aqueuse pigmentée sur le substrat et durcissement ultérieur de la laque de base,
la laque de base aqueuse pigmentée contenant un produit de réaction à base de polyéther fonctionnalisé par carboxy, qui peut être préparé par transformation
(a) d'au moins un dianhydride cyclique d'un acide tétracarboxylique doté d'un radical X aliphatique, aromatique ou araliphatique pontant les deux groupes anhydride,
avec
(b) au moins un polyéther de formule structurale générale (II) 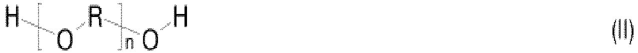
dans laquelle R est un radical C₃₋₆-alkylène et n est choisi manière correspondante de telle sorte que le polyéther (b) possède un poids moléculaire moyen en nombre, déterminé comme indiqué dans la description, de 500 à 5 000 g/mole,
les composants (a) et (b) étant utilisés dans la transformation en un rapport molaire de 0,7/2,3 à 1,6/1,7 et le produit de réaction résultant possédant un indice d'acide, déterminé comme indiqué dans la description, de 5 à 80 mg de KOH/g,
et
la couche de laque de base durcie représentant au moins partiellement la couche supérieure du laquage préparé.

2. Procédé selon la revendication 1, **caractérisé en ce que** le polyéther (b) possède un poids moléculaire moyen en nombre, déterminé comme indiqué dans la description, de 650 à 4 000 g/mole.

3. Procédé selon la revendication 1 ou 2, **caractérisé en ce que** le groupe R selon la formule structurale générale (II) comprend des radicaux tétraméthylène.

4. Procédé selon les revendications 1 à 3, **caractérisé en ce que** les composants (a) et (b) sont utilisés en un rapport molaire de 0,45/1 à 0,55/1.

5. Procédé selon les revendications 1 à 4, **caractérisé en ce que** le produit de réaction à base de polyéther possède un poids moléculaire moyen en nombre, déterminé comme indiqué dans la description, de 1 500 à 15 000 g/mole.

6. Procédé selon les revendications 1 à 5, **caractérisé en ce que** la laque de base comprend en outre au moins une résine de polyuréthane greffée au moyen de monomères oléfiniquement insaturés, qui contient en outre des groupes hydroxyle, ainsi qu'une résine de mélamine.

7. Procédé selon les revendications 1 à 6, **caractérisé en ce que** la laque de base est une laque de base à un composant.

8. Procédé selon les revendications 1 à 7, **caractérisé en ce que** le dianhydride d'acide tétracarboxylique (a) est le dianhydride de l'acide pyromellitique, un dianhydride d'acide cyclobutanetétracarboxylique, le dianhydride d'acide benzophénonetétracarboxylique, un dianhydride d'acide bicyclooctènetétracarboxylique et/ou un dianhydride d'acide diphénylsulfonetétracarboxylique.

9. Procédé selon les revendications 1 à 8, **caractérisé en ce qu'**un substrat métallique ou un substrat de plastique est utilisé en tant que substrat.

10. Procédé selon les revendications 1 à 9, **caractérisé en ce que** le substrat est un substrat métallique et, avant l'application de la laque de base sur le substrat, un laquage par électro-immersion durci et éventuellement un revêtement de remplissage durci sont produits.

11. Procédé selon les revendications 1 à 10, **caractérisé en ce qu'**après l'application de la laque de base, au moins une laque transparente est appliquée et la laque de base ainsi que la laque transparente sont durcies conjointement.

12. Procédé selon les revendications 1 à 11, **caractérisé en ce que** la laque de base est durcie à une température de 70 à 120 °C, encore préférablement de 75 à 110 °C, tout particulièrement préférablement de 75 à 100 °C.

13. Procédé selon les revendications 1 à 12, **caractérisé en ce que** le produit de réaction présente un indice d'acide, déterminé comme indiqué dans la description, de 10 à 70 mg de KOH/g.

14. Substrat laqué qui peut être préparé au moyen du procédé selon les revendications 1 à 13.

15. Utilisation d'une laque de base aqueuse pigmentée contenant un produit de réaction à base de polyéther fonctionnalisé par carboxy, qui peut être préparé par transformation
(a) d'au moins un dianhydride cyclique d'un acide tétracarboxylique doté d'un radical X aliphatique, aromatique ou araliphatique pontant les deux groupes anhydride,
avec
(b) au moins un polyéther de formule structurale générale (II) 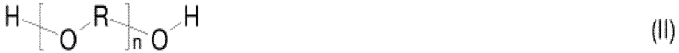
dans laquelle R est un radical C₃₋₆-alkylène et n est choisi de manière correspondante de telle sorte que le polyéther (b) possède un poids moléculaire moyen en nombre, déterminé comme indiqué dans la description, de 500 à 5 000 g/mole,
les composants (a) et (b) étant utilisés dans la transformation en un rapport molaire de 0,7/2,3 à 1,6/1,7 et le produit de réaction résultant possédant un indice d'acide, déterminé comme indiqué dans la description, de 5 à 80 mg de KOH/g,
pour l'amélioration de la stabilité mécanique, en particulier de l'adhérence, de laquages, dans la préparation desquels la laque de base a été utilisée et qui ont été soumis à un durcissement à basse température.
